# EUROPEAN PATENT SPECIFICATION

(11) **EP 2 884 801 B1**
(45) Date of publication and mention of the grant of the patent: **18.05.2016**
(21) Application number: 12884113.7
(22) Date of filing: 05.09.2012
(51) Int. Cl.: H04W 72/04, H04W 84/04

(54) **INFORMATION TRANSMISSION METHOD, FIRST NETWORK DEVICE, CONTROL NODE AND USER EQUIPMENT**
INFORMATIONSÜBERTRAGUNGSVERFAHREN, ERSTE NETZWERKVORRICHTUNG, STEUERKNOTEN UND BENUTZERAUSRÜSTUNG
PROCÉDÉ DE TRANSMISSION D'INFORMATIONS, PREMIER DISPOSITIF DE RÉSEAU, NOEUD DE CONTRÔLE ET ÉQUIPEMENT D'UTILISATEUR

(43) Date of publication of application: 17.06.2015
(73) Proprietor: Huawei Technologies Co., Ltd., Longgang District Shenzhen, Guangdong 518129 (CN)
(72) Inventor: CHEN, Dong, Shenzhen Guangdong 518129 (CN); XU, Min, Shenzhen Guangdong 518129 (CN)
(74) Representative: Thun, Clemens
(86) International application number: PCT/CN2012/081025
(87) International publication number: WO 2014/036700

(56) References cited:
- EP-A1- 2 201 728
- WO-A2-2006/086359
- CN-A- 101 765 138
- CN-A- 102 257 748
- CN-A- 102 365 887
- US-A1- 2005 249 164
- US-A1- 2011 143 675
- "3rd Generation Partnership Project; Technical Specification Group Radio Access Network; Medium Access Control (MAC) protocol specification (Release 11)", 3GPP STANDARD; 3GPP TS 25.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 27 June 2012 (2012-06-27), pages 1-198, XP050581138, [retrieved on 2012-06-27]

## Description

### TECHNICAL FIELD

The present application relates to the communications field, and in particular, to a method for transmitting information, a first network device, and a system.

### BACKGROUND

The wireless communications field is faced with pressure of an explosive increase in data services. To increase the network capacity and reduce the transmission cost, the industry has proposed a heterogeneous network (Hetnet) technology. A Hetnet is formed by multiple cells of different sizes and different types, including: macro cells and micro cells. The micro cells include: a micro cell, a pico cell, a femto cell, a cell with remote radio heads (RRH), and the like. When more micro cells are deployed in an area with heavy traffic, the network capacity of the area can be significantly improved. In addition, the scale of a micro cell is relatively small, and the capital expenditure (CAPEX) and operating expense (OPEX) of the cell are relatively low. Therefore, the Hetnet is valued by lots of operators, and it is an important direction of evolution of a wireless network.

For example, EP 2 201 728 A0 refers to a method for grant violation detection in an enhanced uplink (UL) telecommunication system. According to the method a radio network controller (RNC) establishes a first enhanced UL transport channel (E-DCH) which enables uplink data traffic with a certain data rate from a user terminal UE at least to a first base station. At least a first downlink transmission is performed to the user terminal UE including a first E-DCH. A Node B NB detects the scheduled data rate on which the user terminal UE transmits and further controls if the scheduled data rate detected is higher than the maximum data rate defined by the first E-DCH channel scheduled grant. If this is the case the Node B NB performs at least a second following downlink transmission including the first E-DCH channel scheduled grant.

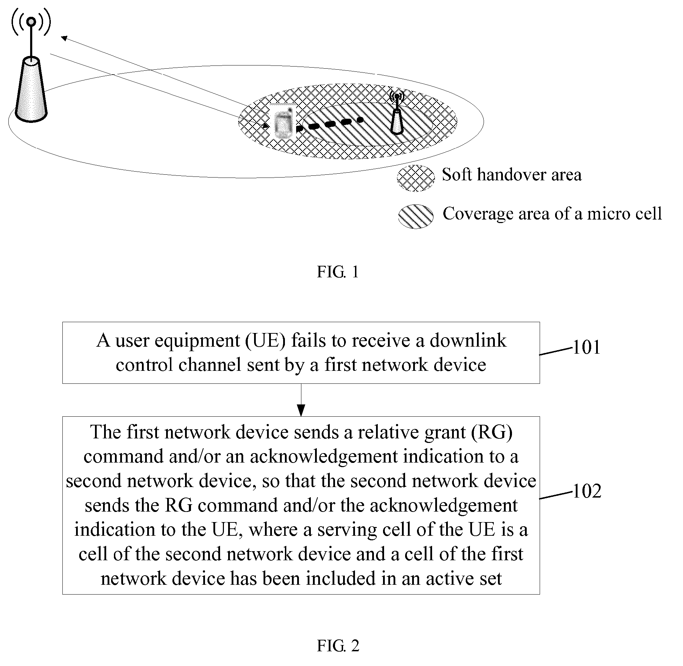

In the prior art, when a micro cell and a macro cell are deployed in intra-frequency mode, an intra-frequency interference problem may occur in an area with overlapping coverage between the macro cell and the micro cell. To refer to a path loss of a micro cell base station and reduce interference in the micro cell, a user equipment (UE) may add the micro cell to an active set in advance by using a method such as reducing a threshold for reporting an event. Specifically, as shown in FIG. 1, the outermost circle is a coverage area of the macro cell, the innermost circle is a coverage area of the micro cell, and the annular area between the dashed circle and the innermost circle is a soft handover area. In the soft handover area, the UE adds the micro cell to the active set.

In a process of implementing the foregoing interference coordination, the inventor has found at least the following problems in the prior art: The micro cell added to the active set may receive uplink data from a UE of the macro cell and forwards it to a radio network controller (RNC) for merging; however, the UE fails to receive an acknowledgement indication delivered by the micro cell due to interference and a relatively low power distribution ratio. As a result, the UE continues to retransmit the uplink data and adjust a service grant to a higher one. However, the UE still fails to receive a relative grant (RG) command delivered by the micro cell. This causes a problem that load and interference of the micro cell are uncontrollable.

### SUMMARY

Embodiments of the present application provide a method for transmitting information, a first network device, and a system, so as to solve a problem that load and interference of a micro cell are uncontrollable because a UE fails to receive a downlink control channel of the micro cell.

To achieve the foregoing objectives, the embodiments of the present application adopt the following technical solutions:

A first aspect of the present application provides a method for transmitting information, including:
when a user equipment (UE) fails to receive a downlink control channel sent by a first network device, sending, by the first network device, a relative grant (RG) command and/or an acknowledgement indication to a second network device, so that the second network device sends the RG command and/or the acknowledgement indication to the UE, where a serving cell of the UE is a cell of the second network device and a cell of the first network device has been included in an active set.

With reference to the first aspect, in a possible implementation manner, before the sending, by the first network device, the RG command and/or the acknowledgement indication to the second network device, the method further includes:
detecting, by the first network device, that the UE fails to receive the downlink control channel sent by the first network device.

With reference to the first aspect and the foregoing possible implementation manner, in another possible implementation manner, the detecting, by the first network device, that the UE fails to receive the downlink control channel sent by the first network device includes:
detecting, by the first network device, that the RG command sent to the UE in a predetermined time does not work; and/or
detecting, by the first network device, that the UE still retransmits uplink data in the predetermined time.

With reference to the first aspect and the foregoing possible implementation manners, in another possible implementation manner, before the sending, by the first network device, the RG command and/or the acknowledgement indication to the second network device, the method further includes:
receiving, by the first network device, a first auxiliary transmission request sent by a control node, where the control node sends the first network device the first auxiliary transmission request after receiving a radio resource control (RRC) message sent by the UE, and
the RRC message includes a triggering instruction and/or a micro cell identifier, and the UE sends the RRC message when the UE detects that it fails to receive the downlink control channel sent by the first network device.

With reference to the first aspect and the foregoing possible implementation manners, in another possible implementation manner, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

With reference to the first aspect and the foregoing possible implementation manners, in another possible implementation manner, before the sending, by the first network device, the RG command and/or the acknowledgement indication to the second network device, the method further includes:
receiving, by the first network device, a second auxiliary transmission request sent by the UE, where:
   the second auxiliary transmission request includes the triggering instruction and/or the micro cell identifier, and the UE sends the second auxiliary transmission request when the UE detects that it fails to receive the downlink control channel sent by the first network device.

With reference to the first aspect and the foregoing possible implementation manners, in another possible implementation manner, the method further includes:
when the UE fails to receive the acknowledgement indication sent by the first network device, sending, by the first network device, a third auxiliary transmission request to the control node, where the third auxiliary transmission request is used to instruct the control node to send, after the control node receives uplink data of the UE, an acknowledgement indication to the UE through the second network device.

With reference to the first aspect and the foregoing possible implementation manners, in another possible implementation manner, before the sending, by the first network device, the RG command and/or the acknowledgement indication to the second network device, the method further includes:
establishing, by the first network device, an information transmission channel corresponding to the UE with the second network device; and
the sending, by the first network device, the RG command and/or the acknowledgement indication to the second network device is specifically: sending, by the first network device, the RG command and/or the acknowledgement indication to the second network device through the information transmission channel.

With reference to the first aspect and the foregoing possible implementation manners, in another possible implementation manner, the acknowledgement indication includes timing information, where the timing information is used to determine timing information of a hybrid automatic repeat request (HARQ) process corresponding to the acknowledgement indication sent to the UE.

With reference to the first aspect and the foregoing possible implementation manners, in another possible implementation manner, the sending, by the second network device, the RG command and/or the acknowledgement indication to the UE includes: determining, by the second network device, a final RG command according to the RG command and a condition of a macro cell and sending the final RG command to the UE.

A second aspect of the present application further provides a method for transmitting information, including:
when a user equipment (UE) fails to receive a downlink control channel sent by a first network device, sending, by a control node, a first auxiliary transmission request to the first network device, so that the first network device transmits a relative grant (RG) command and/or an acknowledgement indication to the UE through a second network device, where a serving cell of the UE is a cell of the second network device and a cell of the first network device has been included in an active set.

With reference to the second aspect, in a possible implementation manner, before the sending, by the control node, the first auxiliary transmission request to the first network device, the method further includes:
receiving, by the control node, a radio resource control (RRC) message sent by the UE, where the RRC message includes a triggering instruction and/or a micro cell identifier, the UE sends the RRC message when the UE detects that it fails to receive the downlink control channel sent by the first network device, and
the RRC message is used to instruct the control node to send the first auxiliary transmission request to the first network device and/or instruct the control node to send, after the control node receives uplink data of the UE, an acknowledgement indication to the UE through the second network device.

With reference to the second aspect and the foregoing possible implementation manner, in another possible implementation manner, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

With reference to the second aspect and the foregoing possible implementation manners, in another possible implementation manner, before the sending, by the control node, the first auxiliary transmission request to the first network device, the method further includes:
receiving, by the control node, a third auxiliary transmission request sent by the first network device, where the third auxiliary transmission request is used to instruct the control node to send, after the control node receives the uplink data of the UE, the acknowledgement indication to the UE through the second network device.

A third aspect of the present application further provides a method for transmitting information, including:
when a user equipment (UE) fails to receive a downlink control channel sent by a first network device, receiving, by the UE through a second network device, a relative grant (RG) command and/or an acknowledgement indication sent by the first network device to the second network device, where a serving cell of the UE is a cell of the second network device and a cell of the first network device has been included in an active set.

With reference to the third aspect, in a possible implementation manner, before the receiving, by the UE through the second network device, the RG command and/or the acknowledgement indication sent by the first network device, the method further includes:
after the UE detects that it fails to receive the downlink control channel sent by the first network device, sending, by the UE, a radio resource control (RRC) message to a control node, where the RRC message is used to instruct the control node to send a first auxiliary transmission request to the first network device and/or instruct the control node to send, after the control node receives uplink data of the UE, an acknowledgement indication to the UE through the second network device, and
the RRC message includes a triggering instruction and/or a micro cell identifier.

With reference to the third aspect and the foregoing possible implementation manner, in another possible implementation manner, before the receiving, by the UE through the second network device, the RG command and/or the acknowledgement indication sent by the first network device, the method further includes:
after the UE detects that it fails to receive the downlink control channel sent by the first network device, sending, by the UE, a second auxiliary transmission request to the first network device, where the second auxiliary transmission request includes the triggering instruction and/or the micro cell identifier and is used to instruct the first network device to transmit the RG command and/or the acknowledgement indication to the UE through the second network device.

With reference to the third aspect and the foregoing possible implementation manners, in another possible implementation manner, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

A fourth aspect of the present application provides a first network device, including:
a buffering unit, configured to store a relative grant (RG) command and/or an acknowledgement indication corresponding to a user equipment (UE); and
a sending unit, configured to: when the UE fails to receive a downlink control channel sent by the first network device, send a second network device the RG command and/or the acknowledgement indication stored in the buffering unit, so that the second network device sends the UE the RG command and/or the acknowledgement indication sent by the sending unit, where a serving cell of the UE is a cell of the second network device and a cell of the first network device has been included in an active set.

With reference to the fourth aspect, in a possible implementation manner, the first network device further includes:
a detecting unit, configured to: before the sending unit sends the second network device the RG command and/or the acknowledgement indication, detect that the UE fails to receive the downlink control channel sent by the first network device.

With reference to the fourth aspect and the foregoing possible implementation manner, in another possible implementation manner, the detecting unit is further configured to:
detect that the RG command sent to the UE in a predetermined time does not work; and/or
detect that the UE still retransmits uplink data in the predetermined time.

With reference to the fourth aspect and the foregoing possible implementation manners, in another possible implementation manner, the first network device further includes:
a first receiving unit, configured to: before the sending unit sends the second network device the RG command and/or the acknowledgement indication, receive a first auxiliary transmission request sent by a control node, where the control node sends the first network device the first auxiliary transmission request after receiving a radio resource control (RRC) message sent by the UE, and
the RRC message includes a triggering instruction and/or a micro cell identifier, and the UE sends the RRC message when the UE detects that it fails to receive the downlink control channel sent by the first network device.

With reference to the fourth aspect and the foregoing possible implementation manners, in another possible implementation manner, the first network device further includes:
a second receiving unit, configured to: before the sending unit sends the second network device the RG command and/or the acknowledgement indication, receive a second auxiliary transmission request sent by the UE, where:
   the second auxiliary transmission request received by the second receiving unit includes the triggering instruction and/or the micro cell identifier, and the UE sends the second auxiliary transmission request when the UE detects that it fails to receive the downlink control channel sent by the first network device.

With reference to the fourth aspect and the foregoing possible implementation manners, in another possible implementation manner, the sending unit is further configured to: when the UE fails to receive the acknowledgement indication sent by the first network device, send a third auxiliary transmission request to the control node, where the third auxiliary transmission request sent by the sending unit is used to instruct the control node to send, after the control node receives uplink data of the UE, an acknowledgement indication to the UE through the second network device.

With reference to the fourth aspect and the foregoing possible implementation manners, in another possible implementation manner, the first network device further includes:
an establishing unit, configured to: before the sending unit sends the second network device the RG command and/or the acknowledgement indication, establish an information transmission channel corresponding to the UE with the second network device, where
the sending, by the sending unit, the second network device the RG command and/or the acknowledgement indication is specifically: sending the RG command and/or the acknowledgement indication through the information transmission channel established by the establishing unit.

With reference to the fourth aspect and the foregoing possible implementation manners, in another possible implementation manner,
the acknowledgement indication includes timing information, where the timing information is used to determine timing information of a hybrid automatic repeat request (HARQ) process corresponding to the acknowledgement indication sent to the UE.

With reference to the fourth aspect and the foregoing possible implementation manners, in another possible implementation manner, the sending, by the second network device, the UE the RG command and/or the acknowledgement indication sent by the sending unit includes: determining, by the second network device, a final RG command according to the RG command sent by the sending unit and a condition of a macro cell and sending the final RG command to the UE.

A fifth aspect of the present application provides a control node, including:
a generating unit, configured to generate a first auxiliary transmission request when a user equipment (UE) fails to receive a downlink control channel sent by a first network device; and
a sending unit, configured to send the first network device the first auxiliary transmission request generated by the generating unit, so that the first network device transmits a relative grant (RG) command and/or an acknowledgement indication to the UE through a second network device, where a serving cell of the UE is a cell of the second network device and a cell of the first network device has been included in an active set.

With reference to the fifth aspect, in a possible implementation manner, the control node further includes:
a receiving unit, configured to: before the sending unit sends the first network device the first auxiliary transmission request generated by the generating unit, receive a radio resource control (RRC) message sent by the UE, where the RRC message includes a triggering instruction and/or a micro cell identifier, the UE sends the RRC message when the UE detects that it fails to receive the downlink control channel sent by the first network device, and
the RRC message is used to instruct the control node to send the first network device the first auxiliary transmission request generated by the generating unit and/or instruct the control node to send, after the control node receives uplink data of the UE, an acknowledgement indication to the UE through the second network device.

With reference to the fifth aspect and the foregoing possible implementation manner, in another possible implementation manner, the receiving unit is further configured to: before the sending unit sends the first network device the first auxiliary transmission request generated by the generating unit, receive a third auxiliary transmission request sent by the first network device, where the third auxiliary transmission request received by the receiving unit is used to instruct the control node to send, after the control node receives the uplink data of the UE, the acknowledgement indication to the UE through the second network device.

A sixth aspect of the present application provides a user equipment (UE), including:
a receiving unit, configured to: when the user equipment (UE) fails to receive a downlink control channel sent by a first network device, receive, through a second network device, a relative grant (RG) command and/or an acknowledgement indication sent by the first network device, where a serving cell of the UE is a cell of the second network device and a cell of the first network device has been included in an active set; and
an executing unit, configured to execute the RG command received by the receiving unit, and/or stop data retransmission according to the acknowledgement indication.

With reference to the sixth aspect, in a possible implementation manner, the UE further includes:
a sending unit, configured to: before the receiving unit receives, through the second network device, the RG command and/or the acknowledgement indication sent by the first network device, and after the sending unit detects that the receiving unit fails to receive the downlink control channel sent by the first network device, send a radio resource control (RRC) message to a control node, where the RRC message sent by the sending unit is used to instruct the control node to send a first auxiliary transmission request to the first network device and/or instruct the control node to send, after the control node receives uplink data of the UE, an acknowledgement indication to the UE through the second network device, and
the RRC message sent by the sending unit includes a triggering instruction and/or a micro cell identifier.

With reference to the sixth aspect and the foregoing possible implementation manner, in another implementation manner, the sending unit is further configured to: before the receiving unit receives, through the second network device, the RG command and/or the acknowledgement indication sent by the first network device, and after the sending unit detects that the receiving unit fails to receive the downlink control channel sent by the first network device, send a second auxiliary transmission request to the first network device, where the second auxiliary transmission request sent by the sending unit includes the triggering instruction and/or the micro cell identifier and is used to instruct the first network device to transmit the RG command and/or the acknowledgement indication to the UE through the second network device.

A seventh aspect of the present application further provides a first network device, including:
a memory, configured to store a relative grant (RG) command and/or an acknowledgement indication corresponding to a user equipment (UE); and
a transmitter, configured to: when the UE fails to receive a downlink control channel sent by the first network device, send a second network device the RG command and/or the acknowledgement indication stored in the memory, so that the second network device sends the UE the RG command and/or the acknowledgement indication sent by the transmitter, where a serving cell of the UE is a cell of the second network device and a cell of the first network device has been included in an active set.

With reference to the seventh aspect, in a possible implementation manner, the first network device further includes:
a processor, configured to: before the transmitter sends the second network device the RG command and/or the acknowledgement indication, detect that the UE fails to receive the downlink control channel sent by the first network device.

With reference to the seventh aspect and the foregoing possible implementation manner, in another possible implementation manner, the processor is further configured to:
detect that the RG command sent to the UE in a predetermined time does not work; and/or
detect that the UE still retransmits uplink data in the predetermined time.

With reference to the seventh aspect and the foregoing possible implementation manners, in another possible implementation manner, the first network device further includes:
a receiver, configured to: before the transmitter sends the second network device the RG command and/or the acknowledgement indication, receive a first auxiliary transmission request sent by a control node, where the control node sends the first network device the first auxiliary transmission request after receiving a radio resource control (RRC) message sent by the UE, and
the RRC message includes a triggering instruction and/or a micro cell identifier, and the UE sends the RRC message when the UE detects that it fails to receive the downlink control channel sent by the first network device.

With reference to the seventh aspect and the foregoing possible implementation manner, in another possible implementation manner, the receiver is further configured to: before the transmitter sends the second network device the RG command and/or the acknowledgement indication, receive a second auxiliary transmission request sent by the UE, where:
the second auxiliary transmission request received by the receiver includes the triggering instruction and/or the micro cell identifier, and the UE sends the second auxiliary transmission request when the UE detects that it fails to receive the downlink control channel sent by the first network device.

With reference to the seventh aspect and the foregoing possible implementation manners, in another possible implementation manner, the transmitter is further configured to: when the UE fails to receive the acknowledgement indication sent by the first network device, send a third auxiliary transmission request to the control node, where the third auxiliary transmission request sent by the transmitter is used to instruct the control node to send, after the control node receives uplink data of the UE, an acknowledgement indication to the UE through the second network device.

With reference to the seventh aspect and the foregoing possible implementation manners, in another possible implementation manner, the processor is further configured to: before the transmitter sends the second network device the RG command and/or the acknowledgement indication, establish an information transmission channel corresponding to the UE with the second network device; and
the sending, by the transmitter, the second network device the RG command and/or the acknowledgement indication is specifically: sending the RG command and/or the acknowledgement indication through the information transmission channel established by the processor.

With reference to the seventh aspect and the foregoing possible implementation manners, in another possible implementation manner,
the acknowledgement indication includes timing information, where the timing information is used to determine timing information of a hybrid automatic repeat request (HARQ) process corresponding to the acknowledgement indication sent to the UE.

With reference to the seventh aspect and the foregoing possible implementation manners, in another possible implementation manner,
the sending, by the second network device, the UE the RG command and/or the acknowledgement indication sent by the transmitter includes: determining, by the second network device, a final RG command according to the RG command sent by the transmitter and a condition of a macro cell and sending the final RG command to the UE.

An eighth aspect of the present application further provides a control node, including:
a processor, configured to generate a first auxiliary transmission request when a user equipment (UE) fails to receive a downlink control channel sent by a first network device; and
a transmitter, configured to: when the UE fails to receive the downlink control channel sent by the first network device, send the first network device the first auxiliary transmission request generated by the processor, so that the first network device transmits a relative grant (RG) command and/or an acknowledgement indication to the UE through a second network device, where a serving cell of the UE is a cell of the second network device and a cell of the first network device has been included in an active set.

With reference to the eighth aspect, in a possible implementation manner, the control node further includes:
a receiver, configured to: before the transmitter sends the first network device the first auxiliary transmission request generated by the processor, receive a radio resource control (RRC) message sent by the UE, where the RRC message includes a triggering instruction and/or a micro cell identifier, the UE sends the RRC message when the UE detects that it fails to receive the downlink control channel sent by the first network device, and
the RRC message is used to instruct the control node to send the first network device the first auxiliary transmission request generated by the processor and/or instruct the control node to send, after the control node receives uplink data of the UE, an acknowledgement indication to the UE through the second network device.

With reference to the eighth aspect and the foregoing possible implementation manner, in another possible implementation manner, the receiver is further configured to: before the transmitter sends the first network device the first auxiliary transmission request generated by the processor, receive a third auxiliary transmission request sent by the first network device, where the third auxiliary transmission request received by the receiver is used to instruct the control node to send, after the control node receives the uplink data of the UE, the acknowledgement indication to the UE through the second network device.

A ninth aspect of the present application further provides a user equipment (UE), including:
a receiver, configured to: when the user equipment (UE) fails to receive a downlink control channel sent by a first network device, receive, through a second network device, a relative grant (RG) command and/or an acknowledgement indication sent by the first network device to the second network device, wherein a serving cell of the UE is a cell of the second network device and a cell of the first network device has been included in an active set; and
a processor, configured to execute the RG command received by the receiver, and/or stop data retransmission according to the acknowledgement indication.

With reference to the ninth aspect, in a possible implementation manner, the UE further includes:
a transmitter, configured to: before the receiver receives, through the second network device, the RG command and/or the acknowledgement indication sent by the first network device, and after the transmitter detects that the receiver fails to receive the downlink control channel sent by the first network device, send a radio resource control (RRC) message to a control node, where the RRC message sent by the transmitter is used to instruct the control node to send a first auxiliary transmission request to the first network device and/or instruct the control node to send, after the control node receives uplink data of the UE, an acknowledgement indication to the UE through the second network device, and
the RRC message sent by the transmitter includes a triggering instruction and/or a micro cell identifier.

With reference to the ninth aspect and the foregoing possible implementation manner, in another implementation manner, the transmitter is further configured to: before the receiver receives, through the second network device, the RG command and/or the acknowledgement indication sent by the first network device, and after the transmitter detects that the receiver fails to receive the downlink control channel sent by the first network device, send a second auxiliary transmission request to the first network device, where the second auxiliary transmission request sent by the transmitter includes the triggering instruction and/or the micro cell identifier and is used to instruct the first network device to transmit the RG command and/or the acknowledgement indication to the UE through the second network device.

A tenth aspect of the present application provides a system for transmitting information, including a first network device, a user equipment (UE), and a second network device, where:
the first network device is configured to: when the user equipment (UE) fails to receive a downlink control channel sent by the first network device, send an RG command and/or an acknowledgement indication to the second network device, so that the second network device sends the RG command and/or the acknowledgement indication to the UE, where a serving cell of the UE is a macro cell and a micro cell has been included in an active set;
the UE is configured to: when the user equipment (UE) fails to receive the downlink control channel sent by the first network device, receive, through the second network device, the RG command and/or the acknowledgement indication sent by the first network device, where the serving cell of the UE is a cell of the second network device and a cell of the first network device has been included in the active set; and
the second network device is configured to receive the RG command and/or the acknowledgement indication sent by the first network device, so that the second network device sends the RG command and/or the acknowledgement indication to the UE.

With reference to the tenth aspect, in another possible implementation manner, the system further includes: a control node, where:
the control node is configured to: when the user equipment (UE) fails to receive the downlink control channel sent by the first network device, send a first auxiliary transmission request to the first network device, so that the first network device transmits the RG command and/or the acknowledgement indication to the UE through the second network device, where the serving cell of the UE is the cell of the second network device and the cell of the first network device has been included in the active set.

According to the method for transmitting information, the first network device, and the system provided in the embodiments of the present application, a first network device sends an RG command and/or an acknowledgement indication to a second network device, so that the second network device sends the RG command and/or the acknowledgement indication to the UE. Compared with the prior art in which the UE fails to receive the downlink control channel of a micro cell, when the user equipment (UE) fails to receive a downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

### BRIEF DESCRIPTION OF DRAWINGS

To illustrate the technical solutions in the embodiments of the present application more clearly, the following briefly introduces the accompanying drawings required for describing the embodiments. Apparently, the accompanying drawings in the following description show merely some embodiments of the present application, and persons of ordinary skill in the art may still derive other drawings from these accompanying drawings without creative efforts.
FIG. 1 is a schematic diagram of coverage areas of a micro cell and a macro cell;
FIG. 2 is a flowchart of a method for transmitting information according to an embodiment of the present application;
FIG. 3 is a flowchart of another method for transmitting information according to an embodiment of the present application;
FIG. 4 is a flowchart of another method for transmitting information according to an embodiment of the present application;
FIG. 5 is a flowchart of another method for transmitting information according to an embodiment of the present application;
FIG. 6 is a flowchart of another method for transmitting information according to an embodiment of the present application;
FIG. 7 is a flowchart of another method for transmitting information according to an embodiment of the present application;
FIG. 8 is a flowchart of another method for transmitting information according to an embodiment of the present application;
FIG. 9 is a schematic structural diagram of a first network device according to an embodiment of the present application;
FIG. 10 is a schematic structural diagram of a control node according to an embodiment of the present application;
FIG. 11 is a schematic structural diagram of a user equipment according to an embodiment of the present application;
FIG. 12 is a schematic structural diagram of another first network device according to an embodiment of the present application; and
FIG. 13 is a schematic structural diagram of a system for transmitting information according to an embodiment of the present application;
FIG. 14 is a schematic structural diagram of a control node according to an embodiment of the present application;
FIG. 15 is a schematic structural diagram of a user equipment according to an embodiment of the present application.

### DESCRIPTION OF EMBODIMENTS

The following clearly describes the technical solutions in the embodiments of the present application with reference to the accompanying drawings in the embodiments of the present application. Apparently, the described embodiments are merely a part rather than all of the embodiments of the present application. All other embodiments obtained by persons of ordinary skill in the art based on the embodiments of the present application without creative efforts shall fall within the protection scope of the present application.

Technologies described in this document may be applied to various communications systems, for example, current 2G and 3G communications systems and a next-generation communications system, for example, a global system for mobile communications (GSM) system, a code division multiple access (CDMA) system, a time division multiple access (TDMA) system, wideband code division multiple access (WCDMA) system, a frequency division multiple access (FDMA) system, an orthogonal frequency-division multiple access (OFDMA) system, a single-carrier FDMA (SC-FDMA) system, a general packet radio service (GPRS) system, a Long Term Evolution (LTE) system, and other similar communications systems.

This document describes various aspects in combination with a terminal, a base station, and/or a base station node.

A user equipment may be a wireless terminal or a wired terminal. A wireless terminal may be a device providing voice and/or data connectivity for a user, a handheld device having a wireless connection function, or another processing device connecting to a wireless modem. The wireless terminal may communicate with one or more core networks through a radio access network (RAN). The wireless terminal may be a mobile terminal, for example, a mobile phone (or called a "cellular" phone) or a computer equipped with a mobile terminal. For example, the wireless terminal may be a portable, pocket-sized, handheld, computer-embedded, or vehicle-mounted mobile apparatus, which exchanges voice and/or data with the radio access network. For example, the wireless terminal may be a device such as a personal communication service (PCS) phone, a cordless telephone set, a session initiation protocol (SIP) phone, a wireless local loop (WLL) station, or a personal digital assistant (PDA). The wireless terminal may also be called a system, a subscriber unit, a subscriber station, a mobile station, a mobile terminal, a remote station, an access point, a remote terminal, an access terminal, a user terminal, a user agent, or a user equipment.

A base station (for example, an access point) may be a device that communicates with the wireless terminal through one or more sectors on an air interface on an access network. The base station may be used to perform conversion between a received air frame and an IP packet and act as a router between the wireless terminal and another part of the access network, where the another part of the access network may include an Internet Protocol (IP) network. The base station may further coordinate attribute management on the air interface. For example, the base station may be a base station (BTS) in the GSM or CDMA, a base station (NodeB) in the WCDMA, or an evolved base station (NodeB, eNB, or e-NodeB, evolved Node B) in the LTE. This is not limited in the present application.

A base station controller (a source node or a destination node) may be a base station controller (BSC) in the GSM or CDMA or a radio network controller (RNC) in the WCDMA. This is not limited in the present application.

In addition, the terms "system" and "network" are usually interchangeable in this document. The term "and/or" in this document indicates only an association relationship for describing associated objects and represents that three relationships may exist; for example, A and/or B may represent the following three cases: Only A exists, both A and B exist, and only B exists. In addition, the symbol "/" in this document generally represents that associated objects before and after the symbol are in an "or" relationship.

An embodiment of the present application provides a method for transmitting information. As shown in FIG. 2, the method may include the following content.

101. A user equipment (UE) fails to receive a downlink control channel sent by a first network device.

A network device in the present application may be a micro cell base station, a macro cell base station, or a base station with another communications standard, specification type. In the following embodiment, a micro cell base station serving as a first network device and a macro cell base station serving as a second network device are used as an example for description. If a cell of the first network device is a cell under the control of the micro cell base station, it is called a micro cell. If a cell of the first network device is a cell under the control of the macro cell base station, it is called a macro cell.

After the UE adds a micro cell to an active set in advance, the UE may detect a pilot of the micro cell. However, the UE fails to receive a downlink control channel of the micro cell due to interference and a relatively low power distribution ratio of the downlink control channel of the micro cell.

102. The first network device sends a relative grant (RG) command and/or an acknowledgement indication to the second network device, so that the second network device sends the RG command and/or the acknowledgement indication to the UE, where a serving cell of the UE is a cell of the second network device and a cell of the first network device has been included in the active set.

When the user equipment (UE) fails to receive the downlink control channel sent by the first network device, where the downlink control channel may include at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH) and the downlink control channel includes a relative grant (RG) command and/or an acknowledgement indication, the first network device may send the RG command and/or the acknowledgement indication to the second network device, so that the second network device sends the RG command and/or the acknowledgement indication to the UE. In this way, the UE may adjust a service grant according to the RG command, and/or does not continue to retransmit the same service data after receiving the acknowledgement indication.

According to the method for transmitting information provided in this embodiment of the present application, a first network device sends the RG command and/or the acknowledgement indication to a second network device, so that the second network device sends the RG command and/or the acknowledgement indication to the UE. Compared with the prior art in which the UE fails to receive downlink control channel of a micro cell, when the user equipment (UE) fails to receive a downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

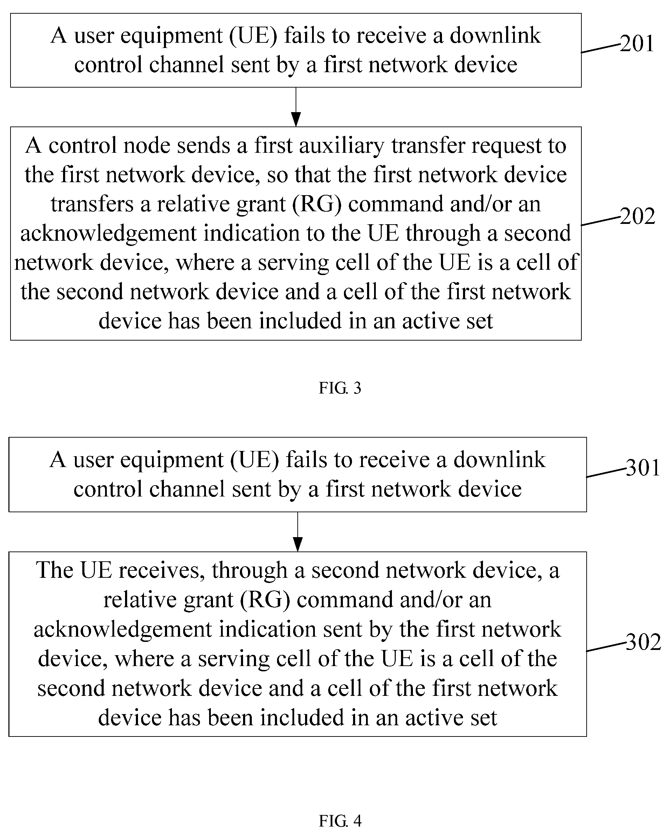

Another embodiment of the present application further provides a method for transmitting information. As shown in FIG. 3, the method may include the following content.

201. A user equipment (UE) fails to receive a downlink control channel sent by a first network device.

202. A control node sends a first auxiliary transmission request to the first network device, so that the first network device transmits a relative grant (RG) command and/or an acknowledgement indication to the UE through a second network device, where a serving cell of the UE is a cell of the second network device and a cell of the first network device has been included in an active set.

When the UE fails to receive the downlink control channel sent by the first network device, the control node may send the first auxiliary transmission request to the first network device, where the first auxiliary transmission request is used to trigger the first network device to transmit the RG command and/or the acknowledgement indication to the UE through the second network device; and the serving cell of the UE is a cell of the second network device and a cell of the first network device has been included in the active set.

According to the method for transmitting information provided in this embodiment of the present application, when a UE fails to receive a downlink control channel sent by a first network device, a control node sends a first auxiliary transmission request to the first network device, so as to trigger the first network device to send an RG command and/or an acknowledgement indication to the UE through a second network device. Compared with the prior art in which the UE fails to receive downlink control channel of a micro cell, when the user equipment (UE) fails to receive the downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

Another embodiment of the present application further provides a method for transmitting information. As shown in FIG. 4, the method may include the following content.

301. A user equipment (UE) fails to receive a downlink control channel sent by a first network device.

302. The UE receives, through a second network device, a relative grant (RG) command and/or an acknowledgement indication sent by the first network device, where a serving cell of the UE is a cell of the second network device and a cell of the first network device has been included in an active set.

When the UE fails to receive the downlink control channel sent by the first network device, the UE may receive, through the second network device, the RG command and/or the acknowledgement indication sent by the first network device, and the serving cell of the UE is a cell of the second network device and a cell of the first network device has been included in the active set.

According to the method for transmitting information provided in this embodiment of the present application, when a UE fails to receive a downlink control channel sent by a first network device, the UE may receive, through a second network device, an RG command and/or an acknowledgement indication sent by the first network device. Compared with the prior art in which the UE fails to receive downlink control channel of a micro cell, when the user equipment (UE) fails to receive the downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

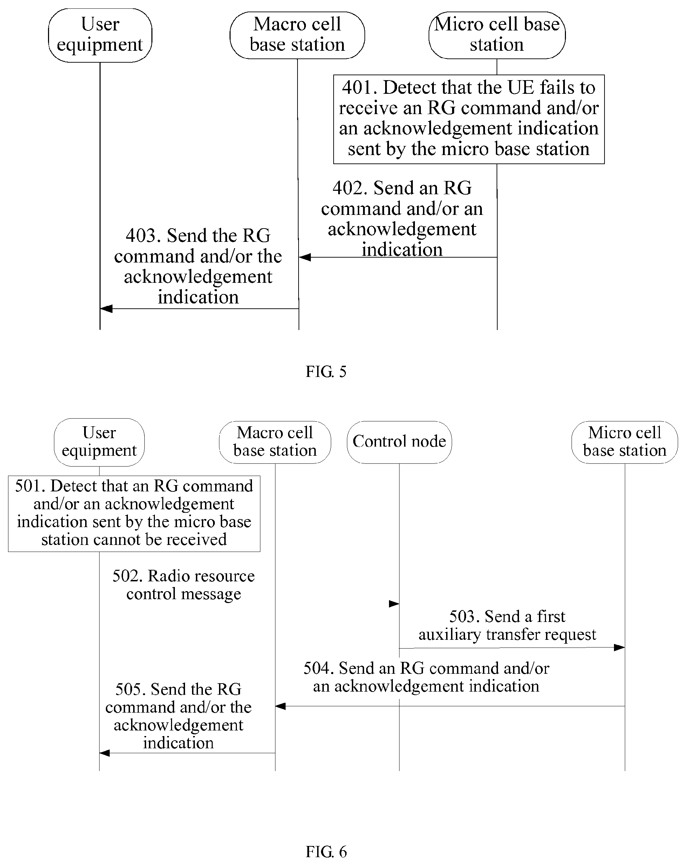

Another embodiment of the present application further provides a method for transmitting information. As shown in FIG. 5, a first network device may trigger a second network device to send an RG command and/or an acknowledgement indication. In this embodiment of the present application, the first network device serving as a micro cell base station and the second network device serving as a macro cell base station are used as an example for description. The method may include the following content.

401. The micro cell base station detects that a UE fails to receive a downlink control channel sent by the micro cell base station.

The detecting, by the micro cell base station, that a UE fails to receive a downlink control channel sent by the micro cell base station may include: detecting, by the micro cell base station, that an RG command sent to the UE in a predetermined time does not work. Specifically, the micro cell base station may detect that RG commands of a predetermined number that are sent to the UE in the predetermined time do not work, and/or the UE still retransmits uplink data in the predetermined time. The downlink control channel may include at least one of the following: a DPCCH, an F-DPCH, an E-RGCH, and an E-HICH, and the downlink control channel includes a relative grant (RG) command and/or an acknowledgement indication.

In this embodiment, when load of a micro cell is too heavy, the micro cell base station may send RG down signaling to the UE through an E-RGCH, so as to control a service grant (SG) of the UE. However, when the UE fails to receive the E-RGCH sent by the micro cell base station, the micro cell base station cannot control the UE to degrade the SG or hold the SG. The micro cell base station finds that the UE uses a higher SG to send data after the micro cell base station sends the RG down signaling to the UE. As a result, the micro cell base station finds that the RG command does not work. For high speed uplink packet access (HSUPA) transmission, a micro cell may receive an uplink channel of the UE, that is, an E-DCH dedicated physical data channel (E-DPDCH), and transmit the uplink channel to an RNC of a macro cell for data merging. At the same time, the micro cell base station sends an acknowledgement indication to notify the UE that the uplink channel is transmitted successfully. However, the UE fails to receive the acknowledgement indication sent by the micro cell base station. Therefore, after the macro cell base station fails to receive data, the UE retransmits the uplink channel. However, the retransmission is unnecessary. In this case, the load and interference of the micro cell caused by the UE further increase. In this embodiment, whether the UE is capable of receiving the RG command and/or the acknowledgement indication sent by the micro cell base station is detected, and after it is detected that the UE fails to receive the RG command and/or the acknowledgement indication sent by the micro cell base station, the macro cell base station forwards the RG command and/or the acknowledgement indication, thereby ensuring that the UE receives the RG command and/or the acknowledgement indication, and reducing the load and interference of the micro cell caused by the UE.

402. The micro cell base station sends the RG command and/or the acknowledgement indication to the macro cell base station.

The acknowledgement indication may include control signaling used to notify the UE that the uplink channel is transmitted successfully. The acknowledgement indication may further include timing information, where the timing information is used to determine timing information of a hybrid automatic repeat request (HARQ) process corresponding to the acknowledgement indication sent to the UE. Specifically, when the UE and a base station run multiple HARQ processes at the same time, each HARQ process may occupy different resources. The macro cell base station may determine, according to the timing information, a specific HARQ process whose corresponding uplink data has been uploaded successfully and send an acknowledgement indication corresponding to the HARQ process to the UE. Alternatively, when the micro cell base station runs only one HARQ process, no timing information may be included.

Further optionally, to avoid a delay that occurs when the micro cell base station sends the RG command and/or the acknowledgement indication to the macro cell base station, the micro cell base station may establish an information transmission channel corresponding to the UE with the macro cell base station before sending the RG command and/or the acknowledgement indication to the macro cell base station. In this case, a transmission delay can be avoided by using a dedicated information transmission channel, and when receiving the acknowledgement indication sent by the micro cell base station, the macro cell base station may directly deliver an acknowledgement indication for a currently executed process. Therefore, the acknowledgement indication sent by the micro cell base station to the macro cell base station may include no timing information. A process of establishing the information transmission channel may be performed after the UE adds a micro cell to an active set, or may be performed at time before step 402. Specifically, the sending, by the micro cell base station, the RG command and/or the acknowledgement indication to the macro cell base station may be: sending the RG command and/or the acknowledgement indication through the information transmission channel.

403. The macro cell base station sends the RG command and/or the acknowledgement indication to the UE.

Optionally, the macro cell base station may directly forward the UE the RG command sent by the micro cell base station. Or, the macro cell base station may determine a final RG command according to the RG command sent by the micro cell base station and a condition of a macro cell and send the final RG command to the UE. For example, when the SG of the UE needs to be degraded due to relatively high load of the micro cell base station, RG down is sent to the macro cell base station. For the macro cell, it is determined, according to a service requirement of the UE and the condition of the macro cell, that the UE should not degrade the SG. Accordingly, the macro cell base station may ignore the RG command sent by the micro cell base station, and send RG up to the UE, and may further notify the micro cell base station of no longer sending a similar RG command. Or, the macro cell base station may determine, according to the condition of the macro cell and the RG down sent by the micro cell base station, to send the UE the final RG command (RG hold) that the SG is kept unchanged.

According to the method for transmitting information provided in this embodiment of the present application, a micro cell base station sends an RG command and/or an acknowledgement indication to a macro cell base station, so that the macro cell base station sends the RG command and/or the acknowledgement indication to the UE. Compared with the prior art in which the UE fails to receive downlink control channel of a micro cell, when the user equipment (UE) fails to receive a downlink control channel sent by the micro cell base station, it may receive, through the macro cell base station, the RG command and/or the acknowledgement indication delivered by the micro cell base station. In this way, uplink transmission is adjusted according to the RG command and/or the acknowledgement indication, and load and interference caused to the micro cell are reduced.

Another embodiment of the present application further provides a method for transmitting information. As shown in FIG. 6, a UE may send an RRC message to a control node so as to trigger the control node to send a first auxiliary transmission request to a first network device, so that the first network device sends an RG command and/or an acknowledgement indication to a second network device. In this embodiment of the present application, the first network device serving as a micro cell base station and the second network device serving as a macro cell base station are used as an example for description. The method may include:

501. The UE detects that it fails to receive a downlink control channel sent by the micro cell base station.

The micro cell base station refers to a micro cell base station added to an active set by the UE. The detecting, by the UE, that it fails to receive the downlink control channel sent by the micro cell base station may include: detecting, by the UE, that it fails to receive or demodulate at least one channel among a DPCCH, an F-DPCH, an E-RGCH, and an E-HICH that are sent by the micro cell base station.

502. The UE sends a radio resource control (RRC) message to the control node.

The RRC message includes a triggering instruction and/or a micro cell identifier, and the RRC message is sent after the UE detects that it fails to receive the downlink control channel sent by the micro cell base station. The RRC message is used to instruct the control node to send the first auxiliary transmission request to the micro cell base station.

Optionally, when only one micro cell exists in the active set of the UE, the RRC message sent by the UE to the control node may carry no micro cell identifier and only carries the triggering instruction. When more than one micro cell exists in the active set of the UE, the RRC message sent to the control node may carry the triggering instruction and the micro cell identifier. The micro cell identifier is used to indicate sending the RG command and/or the acknowledgement indication to a micro cell that exists in the active set of the UE and corresponds to the micro cell identifier.

503. The control node sends the first auxiliary transmission request to the micro cell base station.

After receiving the RRC message sent by the UE, the control node may send the first auxiliary transmission request to the micro cell base station. The control node may send the first auxiliary transmission request to the micro cell base station through signaling or an FP frame, where the first auxiliary transmission request is used to instruct the micro cell base station to perform step 504, that is, send the RG command and/or the acknowledgement indication to the macro cell base station.

Optionally, the control node may determine, according to the RRC message received in step 502, a message that can be carried in the first auxiliary transmission request. When only one micro cell is added by the UE to the active set, the first auxiliary transmission request may carry the triggering instruction and is directly sent to the unique micro cell in the active set. Or, when more than one micro cell exists in the active set of the UE, it is determined, according to the micro cell identifier carried in the RRC message, that the first auxiliary transmission request is sent to the micro cell corresponding to the micro cell identifier.

Optionally, the control node may determine, according to the RRC message received in step 502, a message that can be carried in the first auxiliary transmission request. The control node may require the micro cell to transmit the RG command only, without carrying an acknowledgement indication. The acknowledgement indication may be used to instruct, by using the control node after the control node succeeds in receiving data sent by the user equipment, the macro cell base station to send an acknowledgement indication to the user equipment.

504. The micro cell base station sends the RG command and/or the acknowledgement indication to the macro cell base station.

The micro cell base station may send the RG command and/or the acknowledgement indication to the control node, and then the control node forwards the RG command and/or the acknowledgement indication to the macro cell base station. Or, the micro cell base station may transmit the RG command and/or the acknowledgement indication through a dedicated channel established with the macro cell base station.

It should be noted that for three different Hetnet frameworks, the RG command and/or the acknowledgement indication sent by the micro cell base station to the macro cell base station may also be forwarded through another intermediate device. For example, when the micro cell is managed by a separate RNC, the RNC connects to an RNC of a macro cell through an existing Iur interface, and the micro cell connects to the separate RNC through an Iub and exchanges information with the RNC of the macro cell through the Iur. That is, the micro cell base station first sends the RG command and/or the acknowledgement indication to a control node of the micro cell through the Iub interface, and then the control node forwards the RG command and/or the acknowledgement indication to the macro cell base station through the Iur interface, so as to implement an information exchange between the micro cell base station and the macro cell base station. An information transmission path between the micro cell base station and the macro cell base station includes but is not limited to the foregoing exemplary path, and for an information transmitting manner in another Hetnet framework, no further details are provided in the present application.

505. The macro cell base station sends the RG command and/or the acknowledgement indication to the UE.

It should be noted that for detailed descriptions of steps 504-505, reference may be made to corresponding content in steps 402-403, and for detailed descriptions of some parameters and processes, no further details are provided in this embodiment of the present application.

According to the method for transmitting information provided in this embodiment of the present application, when a UE fails to receive a downlink control channel sent by a micro cell base station, a control node sends a first auxiliary transmission request to the micro cell base station, so as to trigger the micro cell base station to send an RG command and/or an acknowledgement indication to the UE through a macro cell base station. Compared with the prior art in which the UE fails to receive downlink control channel of a micro cell, when the user equipment (UE) fails to receive the downlink control channel sent by the micro cell base station, it may receive, through the macro cell base station, the RG command and/or the acknowledgement indication delivered by the micro cell base station. In this way, uplink transmission is adjusted according to the RG command and/or the acknowledgement indication, and load and interference caused to the micro cell are reduced.

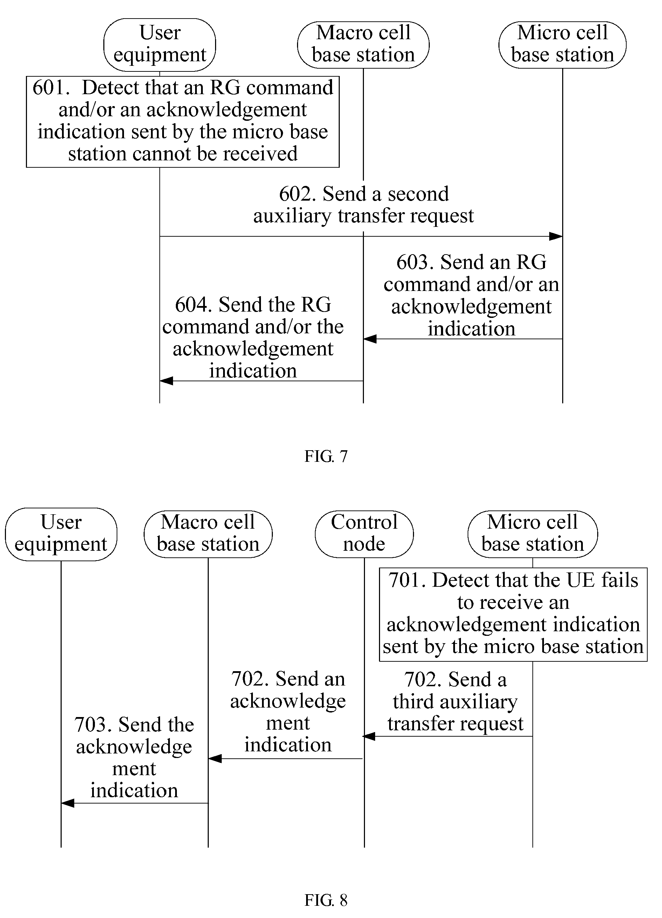

Another embodiment of the present application further provides a method for transmitting information. As shown in FIG. 7, a UE may initiate a trigger to a first network device, so that the first network device sends an RG command and/or an acknowledgement indication to a second network device. In this embodiment of the present application, the first network device serving as a micro cell base station and the second network device serving as a macro cell base station are used as an example for description. The method may include the following content.

601. The UE detects that it fails to receive a downlink control channel sent by the micro cell base station.

602. The UE sends a second auxiliary transmission request to the micro cell base station.

After the UE detects that it fails to receive the downlink control channel sent by the micro cell base station, it sends the second auxiliary transmission request to the micro cell base station, where the second auxiliary transmission request is used to instruct the micro cell base station to perform steps 603-604, that is, send the RG command and/or the acknowledgement indication to the UE.

The second auxiliary transmission request may include a triggering instruction and/or a micro cell identifier. Optionally, when only one micro cell exists in an active set of the UE, the second auxiliary transmission request may carry no micro cell identifier; and after receiving the second auxiliary transmission request, the unique micro cell in the active set is capable of delivering downlink signaling to the UE through the macro cell base station. When more than one micro cell exists in the active set of the UE, the second auxiliary transmission request sent to a micro cell may carry the triggering instruction and/or the micro cell identifier. A micro cell added to the active set may receive the second auxiliary transmission request sent by the UE and matches the micro cell identifier carried in the second auxiliary transmission request with the micro cell identifier of the micro cell itself, and then a matched micro cell is capable of delivering downlink signaling to the UE through the macro cell base station.

Optionally, the second auxiliary transmission request may be included in scheduling information (SI) for sending, or may be included in other data or control information that can be received by a base station.

603. The micro cell base station sends the RG command and/or the acknowledgement indication to the macro cell base station.

604. The macro cell base station sends the RG command and/or the acknowledgement indication to the UE.

It should be noted that for detailed descriptions of some steps, reference may be made to corresponding content in other embodiments of the present application, and for detailed descriptions of some parameters and processes, no further details are provided in this embodiment of the present application.

According to the method for transmitting information provided in this embodiment of the present application, when a UE fails to receive a downlink control channel sent by a micro cell base station, a UE sends a second auxiliary transmission request to the micro cell base station, where the second auxiliary transmission request is used to instruct the micro cell base station to send an RG command and/or an acknowledgement indication to the UE through a macro cell base station. Compared with the prior art in which the UE fails to receive downlink control channel of a micro cell, when the user equipment (UE) fails to receive the downlink control channel sent by the micro cell base station, it may receive, through the macro cell base station, the RG command and/or the acknowledgement indication delivered by the micro cell base station. In this way, uplink transmission is adjusted according to the RG command and/or the acknowledgement indication, and load and interference caused to the micro cell are reduced.

Another embodiment of the present application further provides a method for transmitting information. As shown in FIG. 8, a control node may send an acknowledgement instruction to a UE. In this embodiment of the present application, a first network device serving as a micro cell base station and a second network device serving as a macro cell base station are used as an example for description. The method may include the following content.

701. The micro cell base station detects that the UE fails to receive an acknowledgement indication sent by the micro cell base station.

Optionally, when the micro cell base station detects that the acknowledgement indication delivered to the UE does not work, it may send a third auxiliary transmission request to the control node, so as to instruct the control node to send, after the control node receives uplink data of the UE successfully, an acknowledgement indication to the UE through the macro cell base station. Specifically, when the micro cell base station successfully receives data uploaded by the user equipment, but the macro cell base station fails to receive the data, after acknowledging that the data is merged successfully, the control node instructs the macro cell base station to send an acknowledgement indication to the user equipment. In this case, the micro cell base station does not need to send an acknowledgement indication to the macro cell base station. Or, when the UE detects that it fails to receive the acknowledgement indication sent by the micro cell base station, it may send an RRC message to the control node, where the RRC message is used to instruct the control node to send, after the control node receives the uplink data of the UE, the acknowledgement indication to the UE through the macro cell base station. Or, when the UE detects that it fails to receive the acknowledgement indication sent by the micro cell base station, it may send a second auxiliary transmission request to the micro cell base station, and the micro cell base station sends the third auxiliary transmission request to the control node, so as to instruct the control node to send, after the control node receives the uplink data of the UE successfully, the acknowledgement indication to the UE through the macro cell base station.

702. The micro cell base station sends the third auxiliary transmission request to the control node.

The third auxiliary transmission request is used to instruct the control node to send, after the control node receives the uplink data of the UE, the acknowledgement indication to the UE through the macro cell base station. Specifically, the control node may send the acknowledgement indication to the macro cell base station, so that the macro cell base station sends the acknowledgement indication to the UE.

703. The macro cell base station sends the acknowledgement indication to the UE.

After receiving the acknowledgement indication sent by the macro cell base station, the UE may determine that an uplink channel is transmitted successfully. In this case, the UE does not continue to retransmit an uplink channel to a micro cell, so that interference in the micro cell caused by the UE is reduced.

It should be noted that for detailed descriptions of some steps, reference may be made to corresponding content in other embodiments of the present application, and for detailed descriptions of some parameters and processes, no further details are provided in this embodiment of the present application.

According to the method for transmitting information provided in this embodiment of the present application, when a UE fails to receive an acknowledgement indication sent by a micro cell base station, the UE or the micro cell base station may send a third auxiliary transmission request to a control node, where the third auxiliary transmission request is used to instruct the micro cell base station to send an acknowledgement indication to the UE through a macro cell base station. Compared with the prior art in which the UE fails to receive downlink control channel of a micro cell, when the user equipment (UE) fails to receive the acknowledgement indication sent by the micro cell base station, it may receive, through the macro cell base station, the acknowledgement indication delivered by the micro cell base station. In this way, uplink transmission is adjusted according to the acknowledgement indication, and load and interference caused to the micro cell are reduced.

An embodiment of the present application provides a first network device, including a buffering unit 81 and a sending unit 82.

The buffering unit 81 is configured to store a relative grant (RG) command and/or an acknowledgement indication corresponding to a user equipment (UE).

The sending unit 82 is configured to: when the UE fails to receive a downlink control channel sent by a first network device, send a second network device the RG command and/or the acknowledgement indication stored in the buffering unit 81, so that the second network device sends the UE the RG command and/or the acknowledgement indication sent by the sending unit 82, where a serving cell of the UE is a cell of the second network device and a cell of the first network device has been included in an active set.

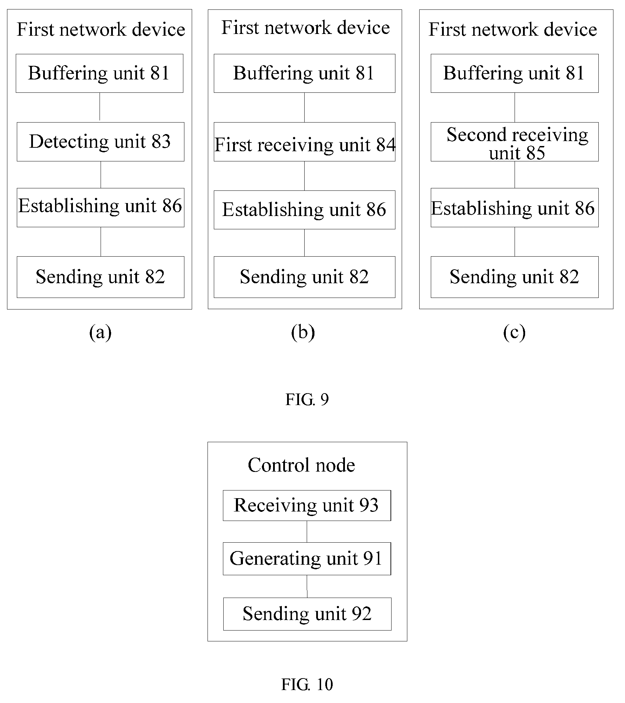

Further, as shown in FIG. 9(a), in an application scenario of this embodiment of the present application, the first network device may further include a detecting unit 83.

The detecting unit 83 is configured to: before the sending unit 82 sends the second network device the RG command and/or the acknowledgement indication, detect that the UE fails to receive the downlink control channel sent by the first network device.

Further, the detecting unit 83 may further be configured to detect that the RG command sent to the UE in a predetermined time does not work, and/or detect that the UE still retransmits uplink data in the predetermined time.

Optionally, as shown in FIG. 9(b), in another application scenario of this embodiment of the present application, the first network device may further include a first receiving unit 84.

The first receiving unit 84 is configured to: before the sending unit 82 sends the second network device the RG command and/or the acknowledgement indication, receive a first auxiliary transmission request sent by a control node, where the control node sends the first network device the first auxiliary transmission request after receiving a radio resource control (RRC) message sent by the UE.

The RRC message includes a triggering instruction and/or a micro cell identifier, and the UE sends the RRC message when the UE detects that it fails to receive the downlink control channel sent by the first network device.

Optionally, as shown in FIG. 9(c), in another application scenario of this embodiment of the present application, the first network device may further include a second receiving unit 85.

The second receiving unit 85 is configured to: before the sending unit 82 sends the second network device the RG command and/or the acknowledgement indication, receive a second auxiliary transmission request sent by the UE.

The second auxiliary transmission request received by the second receiving unit 85 includes the triggering instruction and/or the micro cell identifier, and the UE sends the second auxiliary transmission request when the UE detects that it fails to receive the downlink control channel sent by the first network device.

Further, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

Optionally, in another application scenario of this embodiment of the present application, the sending unit 82 may further be configured to: when the UE fails to receive the acknowledgement indication sent by the first network device, send a third auxiliary transmission request to the control node, where the third auxiliary transmission request sent by the sending unit 82 is used to instruct the control node to send, after the control node receives uplink data of the UE, an acknowledgement indication to the UE through the second network device.

Further, the first network device may further include an establishing unit 86.

The establishing unit 86 is configured to: before the sending unit 82 sends the second network device the RG command and/or the acknowledgement indication, establish an information transmission channel corresponding to the UE with the second network device.

The sending, by the sending unit 82, the second network device the RG command and/or the acknowledgement indication is specifically: sending the RG command and/or the acknowledgement indication through the information transmission channel established by the establishing unit 86.

Further, the acknowledgement indication includes timing information, where the timing information is used to determine timing information of a hybrid automatic repeat request (HARQ) process corresponding to the acknowledgement indication sent to the UE.

Further, the sending, by the second network device, the UE the RG command and/or the acknowledgement indication sent by the sending unit 82 includes: determining, by the second network device, a final RG command according to the RG command sent by the sending unit 82 and a condition of a macro cell and sending the final RG command to the UE.

According to the first network device provided in this embodiment of the present application, the first network device sends the RG command and/or the acknowledgement indication to a second network device, so that the second network device sends the RG command and/or the acknowledgement indication to the UE. Compared with the prior art in which the UE fails to receive downlink control channel of a micro cell, when the user equipment (UE) fails to receive a downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

As shown in FIG. 10, an embodiment of the present application provides a control node, including a generating unit 91 and a sending unit 92.

The generating unit 91 is configured to generate a first auxiliary transmission request when a user equipment (UE) fails to receive a downlink control channel sent by a first network device.

The sending unit 92 is configured to send the first network device the first auxiliary transmission request generated by the generating unit 91, so that the first network device transmits a relative grant (RG) command and/or an acknowledgement indication to the UE through a second network device, where a serving cell of the UE is a cell of the second network device and a cell of the first network device has been included in an active set.

Further, the control node may further include a receiving unit 93.

The receiving unit 93 is configured to: before the sending unit 92 sends the first network device the first auxiliary transmission request generated by the generating unit 91, receive a radio resource control (RRC) message sent by the UE, where the RRC message includes a triggering instruction and/or a micro cell identifier, and the UE sends the RRC message when the UE detects that it fails to receive the downlink control channel sent by the first network device.

The RRC message is used to instruct the control node to send the first network device the first auxiliary transmission request generated by the generating unit 91 and/or instruct the control node to send, after the control node receives uplink data of the UE, an acknowledgement indication to the UE through the second network device.

Further, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

Further, the receiving unit 93 may further be configured to: before the sending unit 92 sends the first network device the first auxiliary transmission request generated by the generating unit 91, receive a third auxiliary transmission request sent by the first network device, where the third auxiliary transmission request received by the receiving unit 93 is used to instruct the control node to send, after the control node receives the uplink data of the UE, the acknowledgement indication to the UE through the second network device.

According to the control node provided in this embodiment of the present application, when a UE fails to receive a downlink control channel sent by a first network device, the control node sends a first auxiliary transmission request to the first network device, so as to trigger the first network device to send the RG command and/or the acknowledgement indication to the UE through a second network device. Compared with the prior art in which the UE fails to receive downlink control channel of a micro cell, when the user equipment (UE) fails to receive the downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

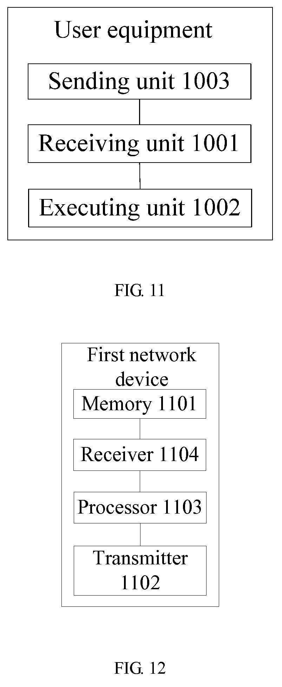

As shown in FIG. 11, an embodiment of the present application provides a user equipment (UE), including a receiving unit 1001 and an executing unit 1002.

The receiving unit 1001 is configured to: when the user equipment (UE) fails to receive a downlink control channel sent by a first network device, receive, through a second network device, a relative grant (RG) command and/or an acknowledgement indication sent by the first network device, where a serving cell of the UE is a cell of the second network device and a cell of the first network device has been included in an active set.

The executing unit 1002 is configured to execute the RG command received by the receiving unit 1001, and/or stop data retransmission according to the acknowledgement indication.

Further, the UE may further include a sending unit 1003.

The sending unit 1003 is configured to: before the receiving unit 1001 receives, through the second network device, the RG command and/or the acknowledgement indication sent by the first network device, and after the sending unit 1003 detects that the receiving unit 1001 fails to receive the downlink control channel sent by the first network device, send a radio resource control (RRC) message to a control node, where the RRC message sent by the sending unit 1003 is used to instruct the control node to send a first auxiliary transmission request to the first network device and/or instruct the control node to send, after the control node receives uplink data of the UE, an acknowledgement indication to the UE through the second network device.

The RRC message sent by the sending unit 1003 includes a triggering instruction and/or a micro cell identifier.

Further, the sending unit 1003 may further be configured to: before the receiving unit 1001 receives, through the second network device, the RG command and/or the acknowledgement indication sent by the first network device, and after the sending unit 1003 detects that the receiving unit 1001 fails to receive the downlink control channel sent by the first network device, send a second auxiliary transmission request to the first network device, where the second auxiliary transmission request sent by the sending unit 1003 includes the triggering instruction and/or the micro cell identifier and is used to instruct the first network device to transmit the RG command and/or the acknowledgement indication to the UE through the second network device.

Further, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

According to the user equipment provided in this embodiment of the present application, when the UE fails to receive a downlink control channel sent by a first network device, the UE may receive, through a second network device, an RG command and/or an acknowledgement indication sent by the first network device. Compared with the prior art in which the UE fails to receive downlink control channel of a micro cell, when the user equipment (UE) fails to receive the downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

As shown in FIG. 12, an embodiment of the present application further provides another first network device, including a memory 1101 and a transmitter 1102.

The memory 1101 is configured to store a relative grant (RG) command and/or an acknowledgement indication corresponding to a user equipment (UE).

The transmitter 1102 is configured to: when the UE fails to receive a downlink control channel sent by the first network device, send a second network device the RG command and/or the acknowledgement indication stored in the memory 1101, so that the second network device sends the UE the RG command and/or the acknowledgement indication sent by the transmitter 1102, where a serving cell of the UE is a cell of the second network device and a cell of the first network device has been included in an active set.

Further, the first network device may further include a processor 1103.

The processor 1103 is configured to: before the transmitter 1102 sends the second network device the RG command and/or the acknowledgement indication, detect that the UE fails to receive the downlink control channel sent by the first network device.

Further, the processor 1103 may further be configured to detect that the RG command sent to the UE in a predetermined time does not work, and/or detect that the UE still retransmits uplink data in the predetermined time.

Further, the first network device may further include a receiver 1104.

The receiver 1104 is configured to: before the transmitter 1102 sends the second network device the RG command and/or the acknowledgement indication, receive a first auxiliary transmission request sent by a control node, where the control node sends the first network device the first auxiliary transmission request after receiving a radio resource control (RRC) message sent by the UE.

The RRC message includes a triggering instruction and/or a micro cell identifier, and the UE sends the RRC message when the UE detects that it fails to receive the downlink control channel sent by the first network device.

Further, the receiver 1104 may further be configured to: before the transmitter 1102 sends the second network device the RG command and/or the acknowledgement indication, receive a second auxiliary transmission request sent by the UE.

The second auxiliary transmission request received by the receiver 1104 includes the triggering instruction and/or the micro cell identifier, and the UE sends the second auxiliary transmission request when the UE detects that it fails to receive the downlink control channel sent by the first network device.

Further, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

Further, the transmitter 1102 may further be configured to: when the UE fails to receive the acknowledgement indication sent by the first network device, send a third auxiliary transmission request to the control node, where the third auxiliary transmission request sent by the transmitter 1102 is used to instruct the control node to send, after the control node receives uplink data of the UE, an acknowledgement indication to the UE through the second network device.

Further, the processor 1103 may further be configured to: before the transmitter 1102 sends the second network device the RG command and/or the acknowledgement indication, establish an information transmission channel corresponding to the UE with the second network device.

The sending, by the transmitter 1102, the second network device the RG command and/or the acknowledgement indication is specifically: sending the RG command and/or the acknowledgement indication through the information transmission channel established by the processor 1103.

Further, the acknowledgement indication includes timing information, where the timing information is used to determine timing information of a hybrid automatic repeat request (HARQ) process corresponding to the acknowledgement indication sent to the UE.

Further, the sending, by the second network device, the UE the RG command and/or the acknowledgement indication sent by the transmitter 1102 includes: determining, by the second network device, a final RG command according to the RG command sent by the transmitter 1102 and a condition of a macro cell and sending the final RG command to the UE.

According to the first network device provided in this embodiment of the present application, the first network device sends the RG command and/or the acknowledgement indication to a second network device, so that the second network device sends the RG command and/or the acknowledgement indication to the UE. Compared with the prior art in which the UE fails to receive downlink control channel of a micro cell, when the user equipment (UE) fails to receive a downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

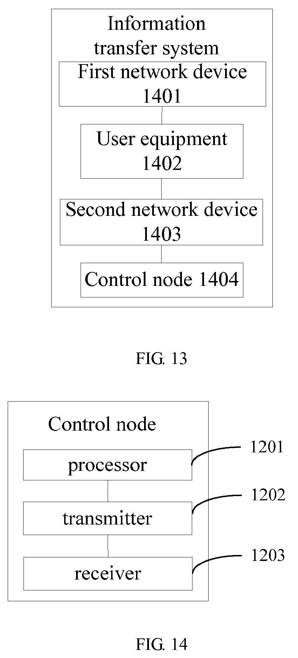

As shown in FIG. 14, an embodiment of the present application further provides another control node, including a processor 1201 and a transmitter 1202.

The processor 1201 is configured to generate a first auxiliary transmission request when a user equipment (UE) fails to receive a downlink control channel sent by a first network device.

The transmitter 1202 is configured to: when the user equipment (UE) fails to receive the downlink control channel sent by the first network device, send the first network device the first auxiliary transmission request generated by the processor 1201, so that the first network device transmits a relative grant (RG) command and/or an acknowledgement indication to the UE through a second network device, where a serving cell of the UE is a cell of the second network device and a cell of the first network device has been included in an active set.

Further, the control node may further include a receiver 1203.

The receiver 1203 is configured to: before the transmitter 1202 sends the first network device the first auxiliary transmission request generated by the processor 1201, receive a radio resource control (RRC) message sent by the UE, where the RRC message includes a triggering instruction and/or a micro cell identifier, and the UE sends the RRC message when the UE detects that it fails to receive the downlink control channel sent by the first network device.

The RRC message is used to instruct the control node to send the first network device the first auxiliary transmission request generated by the processor 1201 and/or instruct the control node to send, after the control node receives uplink data of the UE, an acknowledgement indication to the UE through the second network device.

Further, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

Further, the receiver 1203 may further be configured to: before the transmitter 1202 sends the first network device the first auxiliary transmission request generated by the processor 1201, receive a third auxiliary transmission request sent by the first network device, where the third auxiliary transmission request received by the receiver 1203 is used to instruct the control node to send, after the control node receives the uplink data of the UE, the acknowledgement indication to the UE through the second network device.

According to the control node provided in this embodiment of the present application, when a UE fails to receive a downlink control channel sent by a first network device, the control node sends a first auxiliary transmission request to the first network device, so as to trigger the first network device to send the RG command and/or the acknowledgement indication to the UE through a second network device. Compared with the prior art in which the UE fails to receive downlink control channel of a micro cell, when the user equipment (UE) fails to receive the downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

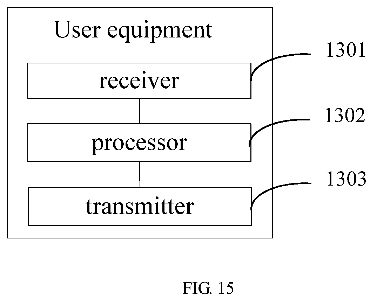

As shown in FIG. 15, an embodiment of the present application further provides another user equipment (UE), including a receiver 1301 and a processor 1302.

The receiver 1301 is configured to: when the user equipment (UE) fails to receive a downlink control channel sent by a first network device, receive, through a second network device, a relative grant (RG) command and/or an acknowledgement indication sent by the first network device, where a serving cell of the UE is a cell of the second network device and a cell of the first network device has been included in an active set.

The processor 1302 is configured to execute the RG command received by the receiver 1301, and/or stop data retransmission according to the acknowledgement indication.

Further, the UE may further include a transmitter 1303.

The transmitter 1303 is configured to: before the receiver 1301 receives, through the second network device, the RG command and/or the acknowledgement indication sent by the first network device, and after the transmitter 1303 detects that the receiver 1301 fails to receive the downlink control channel sent by the first network device, send a radio resource control (RRC) message to a control node, where the RRC message sent by the transmitter 1303 is used to instruct the control node to send a first auxiliary transmission request to the first network device and/or instruct the control node to send, after the control node receives uplink data of the UE, an acknowledgement indication to the UE through the second network device.

The RRC message sent by the transmitter 1303 includes a triggering instruction and/or a micro cell identifier.

Further, the transmitter 1303 may further be configured to: before the receiver 1301 receives, through the second network device, the RG command and/or the acknowledgement indication sent by the first network device, and after the transmitter 1303 detects that the receiver 1301 fails to receive the downlink control channel sent by the first network device, send a second auxiliary transmission request to the first network device, where the second auxiliary transmission request sent by the transmitter 1303 includes the triggering instruction and/or the micro cell identifier and is used to instruct the first network device to transmit the RG command and/or the acknowledgement indication to the UE through the second network device.

Further, the downlink control channel includes at least one of the following: a dedicated physical control channel (DPCCH), a fractional dedicated physical channel (F-DPCH), an E-DCH relative grant channel (E-RGCH), and an E-DCH HARQ acknowledgement indicator channel (E-HICH).

According to the user equipment provided in this embodiment of the present application, when the UE fails to receive a downlink control channel sent by a first network device, the UE may receive, through a second network device, an RG command and/or an acknowledgement indication sent by the first network device. Compared with the prior art in which the UE fails to receive downlink control channel of a micro cell, when the user equipment (UE) fails to receive the downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

As shown in FIG. 13, an embodiment of the present application provides a system for transmitting information, including a first network device 1401, a user equipment (UE) 1402, and a second network device 1403.

The first network device 1401 is configured to: when the user equipment (UE) 1402 fails to receive a downlink control channel sent by the first network device 1401, send the RG command and/or the acknowledgement indication to the second network device 1403, so that the second network device 1403 sends the RG command and/or the acknowledgement indication to the UE 1402, where a serving cell of the UE 1402 is a macro cell and a micro cell has been included in an active set.

The UE 1402 is configured to: when the user equipment (UE) 1402 fails to receive the downlink control channel sent by the first network device 1401, receive, through the second network device 1403, the RG command and/or the acknowledgement indication sent by the first network device 1401, where the serving cell of the UE 1402 is the macro cell and the micro cell has been included in the active set.

The second network device 1403 is configured to receive the RG command and/or the acknowledgement indication sent by the first network device 1401, so that the second network device 1403 sends the RG command and/or the acknowledgement indication to the UE 1402.

Further, the system further includes a control node 1404.

The control node 1404 is configured to: when the user equipment (UE) 1402 fails to receive the downlink control channel sent by the first network device 1401, send a first auxiliary transmission request to the first network device 1401, so that the first network device 1401 transmits the RG command and/or the acknowledgement indication to the UE 1402 through the second network device 1403, where the serving cell of the UE 1402 is the macro cell and the micro cell has been included in the active set.

According to the information transmitting system provided in this embodiment of the present application, a first network device sends the RG command and/or the acknowledgement indication to a second network device, so that the second network device sends the RG command and/or the acknowledgement indication to the UE. Compared with the prior art in which the UE fails to receive downlink control channel of a micro cell, when the user equipment (UE) fails to receive a downlink control channel sent by the first network device, it may receive, through the second network device, the RG command and/or the acknowledgement indication delivered by the first network device. In this way, uplink transmission is adjusted according to the RG command and/or the acknowledgement indication, and load and interference caused to the micro cell are reduced.

It can be clearly understood by persons skilled in the art that, for the purpose of convenient and brief description, division of the foregoing function modules is used as an example for description, in actual application, the foregoing functions can be allocated to different modules and implemented according to the need, that is, the internal structure of the apparatus is divided into different function modules to implement all or a part of the functions described above. For a detailed working process of the foregoing system, apparatus and unit, reference may be made to the corresponding process in the method embodiments, and the details will not be described herein again.

In the several embodiments provided in the present application, it should be understood that the disclosed system, apparatus, and method may be implemented in other manners. For example, the described apparatus embodiments are merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in a form of a software product. The computer software product is stored in a storage medium, and includes several instructions for instructing a computer device (which may be a personal computer, a server, or a network device or the like) or a processor (processor) to perform all or a part of the steps of the methods described in the embodiments of the present application. The foregoing storage medium includes: any medium that can store program code, such as a USB flash drive, a removable hard disk, a read-only memory (ROM), a random access memory (RAM), a magnetic disk, or an optical disc.

Through the foregoing description of the embodiments, it is clear to persons skilled in the art that the present application may be implemented by software plus necessary universal hardware, and definitely may also be implemented by hardware, but in many cases, the former implementation is preferred. Based on such an understanding, the technical solutions of the present application essentially, or the part contributing to the prior art may be implemented in a form of a software product. The computer software product is stored in a readable storage medium, for example, a floppy disk, a hard disk, or an optical disc of the computer, and includes several instructions for instructing a computer device (which may be a personal computer, a server, or a network device or the like) to perform the methods described in the embodiments of the present application.

The foregoing embodiments are merely intended for describing the technical solutions of the present application rather than limiting the present application. Although the present application is described in detail with reference to the foregoing embodiments, persons of ordinary skill in the art should understand that they may still make modifications to the technical solutions described in the foregoing embodiments, or make equivalent replacements to some technical features thereof, as long as such modifications or replacements do not cause the essence of corresponding technical solutions to depart from scope of the technical solutions of the embodiments of the present application.

## Claims

1. A method for transmitting information, comprising:
when (101) a user equipment, UE, fails to receive a downlink control channel sent by a first network device, sending (102), by the first network device, a relative grant, RG, command and/or an acknowledgement indication to a second network device for sending the RG command and/or the acknowledgement indication to the UE, wherein a serving cell of the UE is a cell of the second network device and a cell of the first network device is comprised in an active set.

2. The method according to claim 1, before the sending, by the first network device, the RG command and/or the acknowledgement indication to the second network device, further comprising:
receiving, by the first network device, a first auxiliary transmission request sent by a control node after the control node receives a radio resource control, RRC, message sent by the UE, and the RRC message comprises a triggering instruction and/or a micro cell identifier, and the RRC message is sent by the UE when the UE detects that the UE fails to receive the downlink control channel sent by the first network device; or
receiving, by the first network device, a second auxiliary transmission request sent by the UE, wherein the second auxiliary transmission request comprises a triggering instruction and/or a micro cell identifier, and the second auxiliary transmission request is sent by the UE when the UE detects that the UE fails to receive the downlink control channel sent by the first network device.

3. The method according to claim 1 or 2, before the sending, by the first network device, the RG command and/or the acknowledgement indication to the second network device, further comprising:
establishing, by the first network device, an information transmission channel corresponding to the UE with the second network device, wherein,
the sending, by the first network device, the RG command and/or the acknowledgement indication to the second network device is specifically: sending, by the first network device, the RG command and/or the acknowledgement indication to the second network device through the information transmission channel.

4. The method according to any one of claims 1-3, wherein the acknowledgement indication comprises timing information, and the timing information is used to determine timing information of a hybrid automatic repeat request, HARQ, process corresponding to the acknowledgement indication sent to the UE.

5. A method for transmitting information, comprising:
when (201) a user equipment, UE, fails to receive a downlink control channel sent by a first network device, sending (202), by a control node, a first auxiliary transmission request to the first network device for transmitting a relative grant, RG, command and/or an acknowledgement indication to the UE through a second network device, wherein a serving cell of the UE is a cell of the second network device and a cell of the first network device is comprised in an active set.

6. The method according to claim 5, before the sending, by the control node, the first auxiliary transmission request to the first network device, further comprising:
receiving, by the control node, a radio resource control, RRC, message sent by the UE, wherein the RRC message comprises a triggering instruction and/or a micro cell identifier, the RRC message is sent by the UE when the UE detects that it fails to receive the downlink control channel sent by the first network device, and
the RRC message is used to instruct the control node to send the first auxiliary transmission request to the first network device and/or instruct the control node to send, after the control node receives uplink data of the UE, an acknowledgement indication to the UE through the second network device.

7. The method according to claim 5 or 6, before the sending, by the control node, the first auxiliary transmission request to the first network device, further comprising:
receiving, by the control node, a third auxiliary transmission request sent by the first network device, wherein the third auxiliary transmission request is used to instruct the control node to send, after the control node receives the uplink data of the UE, the acknowledgement indication to the UE through the second network device.

8. A method for transmitting information, comprising:
when (301) a user equipment, UE, fails to receive a downlink control channel sent by a first network device, receiving (302), by the UE through a second network device, a relative grant, RG, command and/or an acknowledgement indication sent by the first network device to the second network device, wherein a serving cell of the UE is a cell of the second network device and a cell of the first network device is comprised in an active set.

9. The method according to claim 8, before the receiving, by the UE through the second network device, the RG command and/or the acknowledgement indication sent by the first network device, further comprising:
after the UE detects that it fails to receive the downlink control channel sent by the first network device, sending, by the UE, a radio resource control, RRC, message to a control node, wherein the RRC message is used to instruct the control node to send a first auxiliary transmission request to the first network device and/or instruct the control node to send, after the control node receives uplink data of the UE, an acknowledgement indication to the UE through the second network device, and
the RRC message comprises a triggering instruction and/or a micro cell identifier.

10. The method according to claim 8 or 9, before the receiving, by the UE through the second network device, the RG command and/or the acknowledgement indication sent by the first network device, further comprising:
after the UE detects that it fails to receive the downlink control channel sent by the first network device, sending, by the UE, a second auxiliary transmission request to the first network device, wherein the second auxiliary transmission request comprises the triggering instruction and/or the micro cell identifier and is used to instruct the first network device to transmit the RG command and/or the acknowledgement indication to the UE through the second network device.

11. A first network device, comprising:
a memory (1101), configured to store a relative grant, RG, command and/or an acknowledgement indication corresponding to a user equipment, UE; and
a transmitter (1102), configured to, when the UE fails to receive a downlink control channel sent by the first network device, send the RG command and/or the acknowledgement indication stored in the memory to a second network device for sending the RG command and/or the acknowledgement indication to the UE, wherein a serving cell of the UE is a cell of the second network device and a cell of the first network device is comprised in an active set.

12. The first network device according to claim 11, further comprising:
a receiver (1104), configured to, before the transmitter sends the RG command and/or the acknowledgement indication to the second network device, receive a first auxiliary transmission request sent by a control node, wherein the first auxiliary transmission request is sent by the control node to the first network device after the control node receives a radio resource control, RRC, message sent by the UE, and the RRC message comprises a triggering instruction and/or a micro cell identifier, and the RRC message is sent by the UE when the UE detects that it fails to receive the downlink control channel sent by the first network device; or
a receiver (1104), configured to, before the transmitter sends the second network device the RG command and/or the acknowledgement indication, receive a second auxiliary transmission request sent by the UE, wherein the second auxiliary transmission request comprises a triggering instruction and/or a micro cell identifier, and the second auxiliary transmission request is sent by the UE when the UE detects that it fails to receive the downlink control channel sent by the first network device.

13. The first network device according to claim 11 or 12, further comprising:
a processor (1103), configured to, before the transmitter sends the second network device the RG command and/or the acknowledgement indication, establish an information transmission channel corresponding to the UE with the second network device; and
wherein the transmitter is further configured to transmit the RG command and/or the acknowledgement indication through the information transmission channel established by the processor.

14. The first network device according to any one of claims 11-13, wherein,
the acknowledgement indication comprises timing information, wherein the timing information is used to determine timing information of a hybrid automatic repeat request, HARQ, process corresponding to the acknowledgement indication sent to the UE.

15. A control node, comprising:
a processor (1201), configured to generate a first auxiliary transmission request when a user equipment, UE, fails to receive a downlink control channel sent by a first network device; and
a transmitter (1202), configured to, when the UE fails to receive the downlink control channel sent by the first network device, send the first auxiliary transmission request to the first network device for transmitting a relative grant, RG, command and/or an acknowledgement indication to the UE through a second network device, wherein a serving cell of the UE is a cell of the second network device and a cell of the first network device is comprised in an active set.

16. The control node according to claim 15, further comprising:
a receiver (1203), configured to, before the transmitter sends the first network device the first auxiliary transmission request generated by the processor, receive a radio resource control, RRC, message sent by the UE, wherein the RRC message comprises a triggering instruction and/or a micro cell identifier, and the RRC message is sent by the UE when the UE detects that it fails to receive the downlink control channel sent by the first network device, and
the RRC message is used to instruct the control node to send the first auxiliary transmission request to the first network device and/or instruct the control node send, after the control node receives uplink data of the UE, an acknowledgement indication to the UE through the second network device.

17. The control node according to claim 15 or 16, wherein,
the receiver (1203) is further configured to, before the transmitter sends the first network device the first auxiliary transmission request, receive a third auxiliary transmission request sent by the first network device, wherein the third auxiliary transmission request is used to instruct the control node to send, after the control node receives the uplink data of the UE, the acknowledgement indication to the UE through the second network device.

18. A user equipment, UE, comprising:
a receiver (1301), configured to, when the UE fails to receive a downlink control channel sent by a first network device, receive, through a second network device, a relative grant, RG, command and/or an acknowledgement indication sent by the first network device to the second network device, wherein a serving cell of the UE is a cell of the second network device and a cell of the first network device is comprised in an active set; and
a processor (1302), configured to execute the RG command , and/or stop data retransmission according to the acknowledgement indication.

19. The UE according to claim 18, further comprising:
a transmitter (1303), configured to, before the receiver receives, through the second network device, the RG command and/or the acknowledgement indication sent by the first network device, and after the transmitter detects that the receiver fails to receive the downlink control channel sent by the first network device, send a radio resource control, RRC, message to a control node, wherein the RRC message sent by the transmitter is used to instruct the control node to send a first auxiliary transmission request to the first network device and/or instruct the control node to send, after the control node receives uplink data of the UE, an acknowledgement indication to the UE through the second network device, and the RRC message comprises a triggering instruction and/or a micro cell identifier; or
a transmitter (1303), configured to, before the receiver receives, through the second network device, the RG command and/or the acknowledgement indication sent by the first network device, and after the transmitter detects that the receiver fails to receive the downlink control channel sent by the first network device, send a second auxiliary transmission request to the first network device, wherein the second auxiliary transmission request comprises the triggering instruction and/or the micro cell identifier and is used to instruct the first network device to transmit the RG command and/or the acknowledgement indication to the UE through the second network device.

## Patentansprüche

1. Verfahren zum Senden von Informationen, das Folgendes umfasst:
wenn (101) eine Nutzerausrüstung ("User Equipment", UE) einen durch eine erste Netzwerkvorrichtung gesendeten Downlink-Steuerkanal nicht empfängt, Senden (102), durch die erste Netzwerkvorrichtung, eines "Relative Grant" (RG)-Befehls und/oder eines Bestätigungshinweises an eine zweite Netzwerkvorrichtung zum Senden des RG-Befehls und/oder des Bestätigungshinweises an die UE, wobei eine bedienende Zelle der UE eine Zelle der zweiten Netzwerkvorrichtung ist und eine Zelle der ersten Netzwerkvorrichtung in einem aktiven Satz enthalten ist.

2. Verfahren nach Anspruch 1, das vor dem Senden, durch die erste Netzwerkvorrichtung, des RG-Befehls und/oder des Bestätigungshinweises an die zweite Netzwerkvorrichtung des Weiteren Folgendes umfasst:
Empfangen, durch die erste Netzwerkvorrichtung, einer ersten Hilfsübertragungsanforderung, die durch einen Steuerungsknoten gesendet wurde, nachdem der Steuerungsknoten eine "Radio Resource Control" (RRC)-Nachricht empfangen hat, die durch die UE gesendet wurde, und die RRC-Nachricht eine Auslöseinstruktion und/oder einen Mikrozellenidentifizierer umfasst, und die RRC-Nachricht durch die UE gesendet wird, wenn die UE detektiert, dass die UE nicht den Downlink-Steuerkanal empfängt, der durch die erste Netzwerkvorrichtung gesendet wurde; oder
Empfangen, durch die erste Netzwerkvorrichtung, einer zweiten Hilfsübertragungsanforderung, die durch die UE gesendet wurde, wobei die zweite Hilfsübertragungsanforderung eine Auslöseinstruktion und/oder einen Mikrozellenidentifizierer umfasst und die zweite Hilfsübertragungsanforderung durch die UE gesendet wird, wenn die UE detektiert, dass die UE nicht den Downlink-Steuerkanal empfängt, der durch die erste Netzwerkvorrichtung gesendet wurde.

3. Verfahren nach Anspruch 1 oder 2, das vor dem Senden, durch die erste Netzwerkvorrichtung, des RG-Befehls und/oder des Bestätigungshinweises an die zweite Netzwerkvorrichtung des Weiteren Folgendes umfasst:
Herstellen, durch die erste Netzwerkvorrichtung, eines Informationsübertragungskanals, der der UE entspricht, mit der zweiten Netzwerkvorrichtung, wobei
das Senden, durch die erste Netzwerkvorrichtung, des RG-Befehls und/oder des Bestätigungshinweises an die zweite Netzwerkvorrichtung insbesondere Folgendes beinhaltet: Senden, durch die erste Netzwerkvorrichtung, des RG-Befehls und/oder des Bestätigungshinweises an die zweite Netzwerkvorrichtung über den Informationsübertragungskanal.

4. Verfahren nach einem der Ansprüche 1-3, wobei der Bestätigungshinweis Zeitsteuerungsinformationen umfasst und die Zeitsteuerungsinformationen dafür verwendet werden, Zeitsteuerungsinformationen eines "Hybrid Automatic Repeat Request" (HARQ)-Prozesses zu bestimmen, die dem an die UE gesendeten Bestätigungshinweis entsprechen.

5. Verfahren zum Senden von Informationen, das Folgendes umfasst:
wenn (201) eine Nutzerausrüstung ("User Equipment", UE) einen durch eine erste Netzwerkvorrichtung gesendeten Downlink-Steuerkanal nicht empfängt, Senden (202), durch einen Steuerungsknoten, einer ersten Hilfsübertragungsanforderung an die erste Netzwerkvorrichtung zum Senden eines "Relative Grant" (RG)-Befehls und/oder eines Bestätigungshinweises an die UE über eine zweite Netzwerkvorrichtung, wobei eine bedienende Zelle der UE eine Zelle der zweiten Netzwerkvorrichtung ist und eine Zelle der ersten Netzwerkvorrichtung in einem aktiven Satz enthalten ist.

6. Verfahren nach Anspruch 5, das vor dem Senden, durch den Steuerungsknoten, der ersten Hilfsübertragungsanforderung an die erste Netzwerkvorrichtung des Weiteren Folgendes umfasst:
Empfangen, durch den Steuerungsknoten, einer "Radio Resource Control" (RRC)-Nachricht, die durch die UE gesendet wurde, wobei die RRC-Nachricht eine Auslöseinstruktion und/oder einen Mikrozellenidentifizierer umfasst, wobei die RRC-Nachricht durch die UE gesendet wird, wenn die UE detektiert, dass sie nicht den Downlink-Steuerkanal empfängt, der durch die erste Netzwerkvorrichtung gesendet wurde, und
die RRC-Nachricht dafür verwendet wird, den Steuerungsknoten anzuweisen, die erste Hilfsübertragungsanforderung an die erste Netzwerkvorrichtung zu senden, und/oder den Steuerungsknoten anzuweisen, nachdem der Steuerungsknoten Uplink-Daten der UE empfangen hat, einen Bestätigungshinweis an die UE über die zweite Netzwerkvorrichtung zu senden.

7. Verfahren nach Anspruch 5 oder 6, das vor dem Senden, durch den Steuerungsknoten, der ersten Hilfsübertragungsanforderung an die erste Netzwerkvorrichtung des Weiteren Folgendes umfasst:
Empfangen, durch den Steuerungsknoten, einer dritten Hilfsübertragungsanforderung, die durch die erste Netzwerkvorrichtung gesendet wurde, wobei die dritte Hilfsübertragungsanforderung dafür verwendet wird, den Steuerungsknoten anzuweisen, nachdem der Steuerungsknoten die Uplink-Daten der UE empfangen hat, den Bestätigungshinweis an die UE über die zweite Netzwerkvorrichtung zu senden.

8. Verfahren zum Senden von Informationen, das Folgendes umfasst:
wenn (301) eine Nutzerausrüstung (User Equipment, UE) einen durch eine erste Netzwerkvorrichtung gesendeten Downlink-Steuerkanal nicht empfängt, Empfangen (302), durch die UE über eine zweite Netzwerkvorrichtung, eines Relative Grant (RG)-Befehls und/oder eines Bestätigungshinweises, der durch die erste Netzwerkvorrichtung an die zweite Netzwerkvorrichtung gesendet wurde, wobei eine bedienende Zelle der UE eine Zelle der zweiten Netzwerkvorrichtung ist und eine Zelle der ersten Netzwerkvorrichtung in einem aktiven Satz enthalten ist.

9. Verfahren nach Anspruch 8, das vor dem Empfangen, durch die UE über die zweite Netzwerkvorrichtung, des RG-Befehls und/oder des Bestätigungshinweises, der durch die erste Netzwerkvorrichtung gesendet wurde, des Weiteren Folgendes umfasst:
nachdem die UE detektiert hat, dass sie nicht den Downlink-Steuerkanal empfängt, der durch die erste Netzwerkvorrichtung gesendet wurde, Senden, durch die UE, einer Radio Ressource Control (RRC)-Nachricht an einen Steuerungsknoten, wobei die RRC-Nachricht dafür verwendet wird, den Steuerungsknoten anzuweisen, eine erste Hilfsübertragungsanforderung an die erste Netzwerkvorrichtung zu senden, und/oder den Steuerungsknoten anzuweisen, nachdem der Steuerungsknoten Uplink-Daten der UE empfangen hat, einen Bestätigungshinweis an die UE über die zweite Netzwerkvorrichtung zu senden, und
die RRC-Nachricht eine Auslöseinstruktion und/oder einen Mikrozellenidentifizierer umfasst.

10. Verfahren nach Anspruch 8 oder 9, das vor dem Empfangen, durch die UE über die zweite Netzwerkvorrichtung, des RG-Befehls und/oder des Bestätigungshinweises, der durch die erste Netzwerkvorrichtung gesendet wurde, des Weiteren Folgendes umfasst:
nachdem die UE detektiert hat, dass sie nicht den Downlink-Steuerkanal empfängt, der durch die erste Netzwerkvorrichtung gesendet wurde, Senden, durch die UE, einer zweiten Hilfsübertragungsanforderung an die erste Netzwerkvorrichtung, wobei die zweite Hilfsübertragungsanforderung die Auslöseinstruktion und/oder den Mikrozellenidentifizierer umfasst und dafür verwendet wird, die erste Netzwerkvorrichtung anzuweisen, den RG-Befehl und/oder den Bestätigungshinweis an die UE über die zweite Netzwerkvorrichtung zu senden.

11. Erste Netzwerkvorrichtung, die Folgendes umfasst:
einen Speicher (1101), der dafür konfiguriert ist, einen Relative Grant (RG)-Befehl und/oder einen Bestätigungshinweis zu speichern, die einer Nutzerausrüstung (User Equipment, UE) entsprechen; und
einen Sender (1102), der dafür konfiguriert ist, wenn die UE einen Downlink-Steuerkanal, der durch die erste Netzwerkvorrichtung gesendet wurde, nicht empfängt, den in dem Speicher gespeicherten RG-Befehl und/oder Bestätigungshinweis an eine zweite Netzwerkvorrichtung zu senden, um den RG-Befehl und/oder den Bestätigungshinweis an die UE zu senden, wobei eine bedienende Zelle der UE eine Zelle der zweiten Netzwerkvorrichtung ist und eine Zelle der ersten Netzwerkvorrichtung in einem aktiven Satz enthalten ist.

12. Erste Netzwerkvorrichtung nach Anspruch 11, die des Weiteren Folgendes umfasst:
einen Empfänger (1104), der dafür konfiguriert ist, bevor der Sender den RG-Befehl und/oder den Bestätigungshinweis an die zweite Netzwerkvorrichtung sendet, eine erste Hilfsübertragungsanforderung, die durch einen Steuerungsknoten gesendet wurde, zu empfangen, wobei die erste Hilfsübertragungsanforderung durch den Steuerungsknoten an die erste Netzwerkvorrichtung gesendet wird, nachdem der Steuerungsknoten eine Radio Ressource Control (RRC)-Nachricht empfangen hat, die durch die UE gesendet wurde, und die RRC-Nachricht eine Auslöseinstruktion und/oder einen Mikrozellenidentifizierer umfasst, und wobei die RRC-Nachricht durch die UE gesendet wird, wenn die UE detektiert, dass sie nicht den Downlink-Steuerkanal empfängt, der durch die erste Netzwerkvorrichtung gesendet wurde; oder
einen Empfänger (1104), der dafür konfiguriert ist, bevor der Sender an die zweite Netzwerkvorrichtung den RG-Befehl und/oder den Bestätigungshinweis sendet, eine zweite Hilfsübertragungsanforderung, die durch die UE gesendet wurde, zu empfangen, wobei die zweite Hilfsübertragungsanforderung eine Auslöseinstruktion und/oder einen Mikrozellenidentifizierer umfasst und die zweite Hilfsübertragungsanforderung durch die UE gesendet wird, wenn die UE detektiert, dass sie nicht den Downlink-Steuerkanal empfängt, der durch die erste Netzwerkvorrichtung gesendet wurde.

13. Erste Netzwerkvorrichtung nach Anspruch 11 oder 12, die des Weiteren Folgendes umfasst:
einen Prozessor (1103), der dafür konfiguriert ist, bevor der Sender an die zweite Netzwerkvorrichtung den RG-Befehl und/oder den Bestätigungshinweis sendet, einen Informationsübertragungskanal, der der UE entspricht, mit der zweiten Netzwerkvorrichtung herzustellen; und
wobei der Sender des Weiteren dafür konfiguriert ist, den RG-Befehl und/oder den Bestätigungshinweis über den durch den Prozessor aufgebauten Informationsübertragungskanal zu senden.

14. Erste Netzwerkvorrichtung nach einem der Ansprüche 11-13, wobei der Bestätigungshinweis Zeitsteuerungsinformationen umfasst, wobei die Zeitsteuerungsinformationen dafür verwendet werden, Zeitsteuerungsinformationen eines "Hybrid Automatic Repeat Request" (HARQ)-Prozesses zu bestimmen, die dem an die UE gesendeten Bestätigungshinweis entsprechen.

15. Steuerungsknoten, der Folgendes umfasst:
einen Prozessor (1201), der dafür konfiguriert ist, eine erste Hilfsübertragungsanforderung zu generieren, wenn eine Nutzerausrüstung (User Equipment, UE) einen durch eine erste Netzwerkvorrichtung gesendeten Downlink-Steuerkanal nicht empfängt; und
einen Sender (1202), der dafür konfiguriert ist, wenn die UE nicht den Downlink-Steuerkanal empfängt, der durch die erste Netzwerkvorrichtung gesendet wurde, die erste Hilfsübertragungsanforderung an die erste Netzwerkvorrichtung zu senden, um einen Relative Grant (RG)-Befehl und/oder einen Bestätigungshinweis an die UE über eine zweite Netzwerkvorrichtung zu senden, wobei eine bedienende Zelle der UE eine Zelle der zweiten Netzwerkvorrichtung ist und eine Zelle der ersten Netzwerkvorrichtung in einem aktiven Satz enthalten ist.

16. Steuerungsknoten nach Anspruch 15, der des Weiteren Folgendes umfasst:
einen Empfänger (1203), der dafür konfiguriert ist, bevor der Sender an die erste Netzwerkvorrichtung die durch den Prozessor generierte erste Hilfsübertragungsanforderung sendet, eine Radio Ressource Control (RRC)-Nachricht zu empfangen, die durch die UE gesendet wurde, wobei die RRC-Nachricht eine Auslöseinstruktion und/oder einen Mikrozellenidentifizierer umfasst und wobei die RRC-Nachricht durch die UE gesendet wird, wenn die UE detektiert, dass sie nicht den Downlink-Steuerkanal empfängt, der durch die erste Netzwerkvorrichtung gesendet wurde, und
die RRC-Nachricht dafür verwendet wird, den Steuerungsknoten anzuweisen, die erste Hilfsübertragungsanforderung an die erste Netzwerkvorrichtung zu senden, und/oder den Steuerungsknoten anzuweisen, nachdem der Steuerungsknoten Uplink-Daten der UE empfangen hat, einen Bestätigungshinweis an die UE über die zweite Netzwerkvorrichtung zu senden.

17. Steuerungsknoten nach Anspruch 15 oder 16, wobei
der Empfänger (1203) des Weiteren dafür konfiguriert ist, bevor der Sender an die erste Netzwerkvorrichtung die erste Hilfsübertragungsanforderung sendet, eine dritte Hilfsübertragungsanforderung zu empfangen, die durch die erste Netzwerkvorrichtung gesendet wurde, wobei die dritte Hilfsübertragungsanforderung dafür verwendet wird, den Steuerungsknoten anzuweisen, nachdem der Steuerungsknoten die Uplink-Daten der UE empfangen hat, den Bestätigungshinweis an die UE über die zweite Netzwerkvorrichtung zu senden.

18. Nutzerausrüstung (User Equipment, UE), die Folgendes umfasst:
einen Empfänger (1301), der dafür konfiguriert ist, wenn die UE einen durch eine erste Netzwerkvorrichtung gesendeten Downlink-Steuerkanal nicht empfängt, über eine zweite Netzwerkvorrichtung einen Relative Grant (RG)-Befehl und/oder einen Bestätigungshinweis, der durch die erste Netzwerkvorrichtung an die zweite Netzwerkvorrichtung gesendet wurde, zu empfangen, wobei eine bedienende Zelle der UE eine Zelle der zweiten Netzwerkvorrichtung ist und eine Zelle der ersten Netzwerkvorrichtung in einem aktiven Satz enthalten ist; und
einen Prozessor (1302), der dafür konfiguriert ist, den RG-Befehl auszuführen und/oder eine Daten-Neuübertragung gemäß dem Bestätigungshinweis zu stoppen.

19. UE nach Anspruch 18, die des Weiteren Folgendes umfasst:
einen Sender (1303), der dafür konfiguriert ist, bevor der Empfänger, über die zweite Netzwerkvorrichtung, den RG-Befehl und/oder den Bestätigungshinweis, die durch die erste Netzwerkvorrichtung gesendet wurden, empfängt, und nachdem der Sender detektiert, dass der Empfänger nicht den Downlink-Steuerkanal empfängt, der durch die erste Netzwerkvorrichtung gesendet wurde, eine Radio Ressource Control (RRC)-Nachricht an einen Steuerungsknoten zu senden, wobei die durch den Sender gesendete RRC-Nachricht dafür verwendet wird, den Steuerungsknoten anzuweisen, eine erste Hilfsübertragungsanforderung an die erste Netzwerkvorrichtung zu senden, und/oder den Steuerungsknoten anzuweisen, nachdem der Steuerungsknoten Uplink-Daten der UE empfangen hat, einen Bestätigungshinweis an die UE über die zweite Netzwerkvorrichtung zu senden, und die RRC-Nachricht eine Auslöseinstruktion und/oder einen Mikrozellenidentifizierer umfasst; oder
einen Sender (1303), der dafür konfiguriert ist, bevor der Empfänger, über die zweite Netzwerkvorrichtung, den RG-Befehl und/oder den Bestätigungshinweis, die durch die erste Netzwerkvorrichtung gesendet wurden, empfängt, und nachdem der Sender detektiert, dass der Empfänger nicht den Downlink-Steuerkanal empfängt, der durch die erste Netzwerkvorrichtung gesendet wurde, eine zweite Hilfsübertragungsanforderung an die erste Netzwerkvorrichtung zu senden, wobei die zweite Hilfsübertragungsanforderung die Auslöseinstruktion und/oder den Mikrozellenidentifizierer umfasst und dafür verwendet wird, die erste Netzwerkvorrichtung anzuweisen, den RG-Befehl und/oder den Bestätigungshinweis an die UE über die zweite Netzwerkvorrichtung zu senden.

## Revendications

1. Procédé permettant de transmettre des informations, comprenant l'étape suivante :
lorsque (101) un équipement utilisateur, UE, ne peut pas recevoir un canal de contrôle de liaison descendante envoyé par un premier dispositif réseau, envoyer (102), par le premier dispositif réseau, une commande d'autorisation relative, RG, et/ou une indication d'accusé de réception à un deuxième dispositif réseau pour envoyer la commande RG et/ou l'indication d'accusé de réception à l'UE, une cellule de desserte de l'UE étant une cellule du deuxième dispositif réseau et une cellule du premier dispositif réseau étant comprise dans un ensemble actif.

2. Procédé selon la revendication 1, avant l'étape consistant à envoyer, par le premier dispositif réseau, la commande RG et/ou l'indication d'accusé de réception au deuxième dispositif réseau, comprenant en outre :
recevoir, par le premier dispositif réseau, une première requête de transmission auxiliaire envoyée par un noeud de commande après que le noeud de commande a reçu un message de contrôle de ressource radio, RRC, envoyé par l'UE, et le message RRC comprend une instruction de déclenchement et/ou un identifiant de micro cellule, et le message RRC est envoyé par l'UE lorsque l'UE détecte que l'UE ne peut pas recevoir le canal de contrôle de liaison descendante envoyé par le premier dispositif réseau ; ou
recevoir, par le premier dispositif réseau, une deuxième requête de transmission auxiliaire envoyée par l'UE, la deuxième requête de transmission auxiliaire comprenant une instruction de déclenchement et/ou un identifiant de micro cellule, et la deuxième requête de transmission auxiliaire étant envoyée par l'UE lorsque l'UE détecte que l'UE ne peut pas recevoir le canal de contrôle de liaison descendante envoyé par le premier dispositif réseau.

3. Procédé selon la revendication 1 ou 2, avant l'étape consistant à envoyer, par le premier dispositif réseau, la commande RG et/ou l'indication d'accusé de réception au deuxième dispositif réseau, comprenant en outre :
établir, par le premier dispositif réseau, un canal de transmission d'informations correspondant à l'UE avec le deuxième dispositif réseau, l'étape consistant à envoyer, par le premier dispositif réseau, la commande RG et/ou l'indication d'accusé de réception au deuxième dispositif réseau étant spécifiquement : envoyer, par le premier dispositif réseau, la commande RG et/ou l'indication d'accusé de réception au deuxième dispositif réseau par l'intermédiaire du canal de transmission d'informations.

4. Procédé selon l'une quelconque des revendications 1-3, dans lequel l'indication d'accusé de réception comprend des informations de temps, et les informations de temps étant utilisées pour déterminer des informations de temps d'un processus de requête de répétition automatique hybride, HARQ, correspondant à l'indication d'accusé de réception envoyée à l'UE.

5. Procédé permettant de transmettre des informations, comprenant l'étape suivante :
lorsque (201) un équipement utilisateur, UE, ne peut pas recevoir un canal de contrôle de liaison descendante envoyé par un premier dispositif réseau, envoyer (202), par un noeud de commande, une première requête de transmission auxiliaire au premier dispositif réseau pour transmettre une commande d'autorisation relative, RG, et/ou une indication d'accusé de réception à l'UE par l'intermédiaire d'un deuxième dispositif réseau, une cellule de desserte de l'UE étant une cellule du deuxième dispositif réseau et une cellule du premier dispositif réseau étant comprise dans un ensemble actif.

6. Procédé selon la revendication 5, avant l'étape consistant à envoyer, par le noeud de commande, la première requête de transmission auxiliaire au premier dispositif réseau, comprenant en outre :
recevoir, par le noeud de commande, un message de contrôle de ressource radio, RRC, envoyé par l'UE, le message RRC comportant une instruction de déclenchement et/ou un identifiant de micro cellule, le message RRC étant envoyé par l'UE lorsque l'UE détecte qu'il ne peut pas recevoir le canal de contrôle de liaison descendante envoyé par le premier dispositif réseau, et
le message RRC est utilisé pour ordonner au noeud de commande d'envoyer la première requête de transmission auxiliaire au premier dispositif réseau et/ou pour ordonner au noeud de commande d'envoyer, après que le noeud de commande a reçu des données de liaison montante de l'UE, une indication d'accusé de réception à l'UE par l'intermédiaire du deuxième dispositif réseau.

7. Procédé selon la revendication 5 ou 6, avant l'étape consistant à envoyer, par le noeud de commande, la première requête de transmission auxiliaire au premier dispositif réseau, comprenant en outre :
recevoir, par le noeud de commande, une troisième requête de transmission auxiliaire envoyée par le premier dispositif réseau, la troisième requête de transmission auxiliaire étant utilisée pour ordonner au noeud de commande d'envoyer, après que le noeud de commande a reçu les données de liaison montante de l'UE, l'indication d'accusé de réception à l'UE par l'intermédiaire du deuxième dispositif réseau.

8. Procédé permettant de transmettre des informations, comprenant :
lorsque (301) un équipement utilisateur, UE, ne peut pas recevoir un canal de contrôle de liaison descendante envoyé par un premier dispositif réseau, recevoir (302), par l'UE par l'intermédiaire d'un deuxième dispositif réseau, une commande d'autorisation relative, RG, et/ou une indication d'accusé de réception envoyées par le premier dispositif réseau au deuxième dispositif réseau, une cellule de desserte de l'UE étant une cellule du deuxième dispositif réseau et une cellule du premier dispositif réseau étant comprise dans un ensemble actif.

9. Procédé selon la revendication 8, avant l'étape consistant à recevoir, par l'UE par l'intermédiaire du deuxième dispositif réseau, la commande RG et/ou l'indication d'accusé de réception envoyées par le premier dispositif réseau, comprenant en outre :
après que l'UE a détecté qu'il ne peut pas recevoir le canal de contrôle de liaison descendante envoyé par le premier dispositif réseau, envoyer, par l'UE, un message de contrôle de ressource radio, RRC, à un noeud de commande, le message RRC étant utilisé pour ordonner au noeud de commande d'envoyer une première requête de transmission auxiliaire au premier dispositif réseau et/ou pour ordonner au noeud de commande d'envoyer, après que le noeud de commande a reçu des données de liaison montante de l'UE, une indication d'accusé de réception à l'UE par l'intermédiaire du deuxième dispositif réseau, et
le message RRC comprend une instruction de déclenchement et/ou un identifiant de micro cellule.

10. Procédé selon la revendication 8 ou 9, avant l'étape consistant à recevoir, par l'UE par l'intermédiaire du deuxième dispositif réseau, la commande RG et/ou l'indication d'accusé de réception envoyées par le premier dispositif réseau, comprenant en outre :
après que l'UE a détecté qu'il ne peut pas recevoir le canal de contrôle de liaison descendante envoyé par le premier dispositif réseau, envoyer, par l'UE, une deuxième requête de transmission auxiliaire au premier dispositif réseau, la deuxième requête de transmission auxiliaire comportant l'instruction de déclenchement et/ou l'identifiant de micro cellule et étant utilisée pour ordonner au premier dispositif réseau de transmettre la commande RG et/ou l'indication d'accusé de réception à l'UE par l'intermédiaire du deuxième dispositif réseau.

11. Premier dispositif réseau, comprenant :
une mémoire (1101), configurée pour stocker une commande d'autorisation relative, RG, et/ou une indication d'accusé de réception correspondant à un équipement utilisateur, UE ; et
un émetteur (1102), configuré pour envoyer, lorsque l'UE ne peut pas recevoir un canal de contrôle de liaison descendante envoyé par le premier dispositif réseau, la commande RG et/ou l'indication d'accusé de réception stockées dans la mémoire à un deuxième dispositif réseau pour envoyer la commande RG et/ou l'indication d'accusé de réception à l'UE, une cellule de desserte de l'UE étant une cellule du deuxième dispositif réseau et une cellule du premier dispositif réseau étant comprise dans un ensemble actif.

12. Premier dispositif réseau selon la revendication 11, comprenant en outre :
un récepteur (1104), configuré pour recevoir, avant que l'émetteur n'envoie la commande RG et/ou l'indication d'accusé de réception au deuxième dispositif réseau, une première requête de transmission auxiliaire envoyée par un noeud de commande, la première requête de transmission auxiliaire étant envoyée par le noeud de commande au premier dispositif réseau après que le noeud de commande a reçu un message de contrôle de ressource radio, RRC, envoyé par l'UE, et le message RRC comportant une instruction de déclenchement et/ou un identifiant de micro cellule, et le message RRC étant envoyé par l'UE lorsque l'UE détecte qu'il ne peut pas recevoir le canal de contrôle de liaison descendante envoyé par le premier dispositif réseau ; ou
un récepteur (1104), configuré pour recevoir, avant que l'émetteur n'envoie au deuxième dispositif réseau la commande RG et/ou l'indication d'accusé de réception, une deuxième requête de transmission auxiliaire envoyée par l'UE, la deuxième requête de transmission auxiliaire comportant une instruction de déclenchement et/ou un identifiant de micro cellule, et la deuxième requête de transmission auxiliaire étant envoyée par l'UE lorsque l'UE détecte qu'il ne peut pas recevoir le canal de contrôle de liaison descendante envoyé par le premier dispositif réseau.

13. Premier dispositif réseau selon la revendication 11 ou 12, comprenant en outre :
un processeur (1103), configuré pour établir, avant que l'émetteur n'envoie au deuxième dispositif réseau la commande RG et/ou l'indication d'accusé de réception, un canal de transmission d'informations correspondant à l'UE avec le deuxième dispositif réseau ; et
l'émetteur étant en outre configuré pour transmettre la commande RG et/ou l'indication d'accusé de réception par l'intermédiaire du canal de transmission d'informations établi par le processeur.

14. Premier dispositif réseau selon l'une quelconque des revendications 11-13, dans lequel :
l'indication d'accusé de réception comprend des informations de temps, les informations de temps étant utilisées pour déterminer des informations de temps d'un processus de requête de répétition automatique hybride, HARQ, correspondant à l'indication d'accusé de réception envoyée à l'UE.

15. Noeud de commande, comprenant :
un processeur (1201), configuré pour générer une première requête de transmission auxiliaire lorsqu'un équipement utilisateur, UE, ne peut pas recevoir un canal de contrôle de liaison descendante envoyé par un premier dispositif réseau ; et
un émetteur (1202), configuré pour envoyer, lorsque l'UE ne peut pas recevoir le canal de contrôle de liaison descendante envoyé par le premier dispositif réseau, la première requête de transmission auxiliaire au premier dispositif réseau pour transmettre une commande d'autorisation relative, RG, et/ou une indication d'accusé de réception à l'UE par l'intermédiaire d'un deuxième dispositif réseau, une cellule de desserte de l'UE étant une cellule du deuxième dispositif réseau et une cellule du premier dispositif réseau étant comprise dans un ensemble actif.

16. Noeud de commande selon la revendication 15, comprenant en outre :
un récepteur (1203), configuré pour recevoir, avant que l'émetteur n'envoie au premier dispositif réseau la première requête de transmission auxiliaire générée par le processeur, un message de contrôle de ressource radio, RRC, envoyé par l'UE, le message RRC comportant une instruction de déclenchement et/ou un identifiant de micro cellule, et le message RRC étant envoyé par l'UE lorsque l'UE détecte qu'il ne peut pas recevoir le canal de contrôle de liaison descendante envoyé par le premier dispositif réseau, et
le message RRC est utilisé pour ordonner au noeud de commande d'envoyer la première requête de transmission auxiliaire au premier dispositif réseau et/ou pour ordonner au noeud de commande d'envoyer, après que le noeud de commande a reçu des données de liaison montante de l'UE, une indication d'accusé de réception à l'UE par l'intermédiaire du deuxième dispositif réseau.

17. Noeud de commande selon la revendication 15 ou 16, dans lequel :
le récepteur (1203) est en outre configuré pour recevoir, avant que l'émetteur n'envoie au premier dispositif réseau la première requête de transmission auxiliaire, une troisième requête de transmission auxiliaire envoyée par le premier dispositif réseau, la troisième requête de transmission auxiliaire étant utilisée pour ordonner au noeud de commande d'envoyer, après que le noeud de commande a reçu les données de liaison montante de l'UE, l'indication d'accusé de réception à l'UE par l'intermédiaire du deuxième dispositif réseau.

18. Équipement utilisateur, UE, comprenant :
un récepteur (1301), configuré pour recevoir, lorsque l'UE ne peut pas recevoir un canal de contrôle de liaison descendante envoyé par un premier dispositif réseau, par l'intermédiaire d'un deuxième dispositif réseau, une commande d'autorisation relative, RG, et/ou une indication d'accusé de réception envoyées par le premier dispositif réseau au deuxième dispositif réseau, une cellule de desserte de l'UE étant une cellule du deuxième dispositif réseau et une cellule du premier dispositif réseau étant comprise dans un ensemble actif ; et
un processeur (1302), configuré pour exécuter la commande RG, et/ou arrêter une retransmission de données selon l'indication d'accusé de réception.

19. UE selon la revendication 18, comprenant en outre :
un émetteur (1303), configuré pour envoyer, avant que le récepteur ne reçoive, par l'intermédiaire du deuxième dispositif réseau, la commande RG et/ou l'indication d'accusé de réception envoyées par le premier dispositif réseau, et après que l'émetteur a détecté que le récepteur ne peut pas recevoir le canal de contrôle de liaison descendante envoyé par le premier dispositif réseau, un message de contrôle de ressource radio, RRC, à un noeud de commande, le message RRC envoyé par l'émetteur étant utilisé pour ordonner au noeud de commande d'envoyer une première requête de transmission auxiliaire au premier dispositif réseau et/ou pour ordonner au noeud de commande d'envoyer, après que le noeud de commande a reçu des données de liaison montante de l'UE, une indication d'accusé de réception à l'UE par l'intermédiaire du deuxième dispositif réseau, et le message RRC comportant une instruction de déclenchement et/ou un identifiant de micro cellule ; ou
un émetteur (1303), configuré pour envoyer, avant que le récepteur ne reçoive, par l'intermédiaire du deuxième dispositif réseau, la commande RG et/ou l'indication d'accusé de réception envoyées par le premier dispositif réseau, et après que l'émetteur a détecté que le récepteur ne peut pas recevoir le canal de contrôle de liaison descendante envoyé par le premier dispositif réseau, une deuxième requête de transmission auxiliaire au premier dispositif réseau, la deuxième requête de transmission auxiliaire comportant l'instruction de déclenchement et/ou l'identifiant de micro cellule et étant utilisée pour ordonner au premier dispositif réseau de transmettre la commande RG et/ou l'indication d'accusé de réception à l'UE par l'intermédiaire du deuxième dispositif réseau.
